(19) Europäisches Patentamt
European Patent Office
Office européen des brevets

(11) **EP 3 764 122 A1**

(12) **EUROPEAN PATENT APPLICATION**
published in accordance with Art. 153(4) EPC

(43) Date of publication:
**13.01.2021 Bulletin 2021/02**

(51) Int Cl.:
*G01S 5/12* *(2006.01)*    *G07B 15/06* *(2011.01)*

(21) Application number: **19764018.8**

(22) Date of filing: **26.02.2019**

(86) International application number:
**PCT/JP2019/007176**

(87) International publication number:
**WO 2019/172009 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2018 US 201862640260 P**
**07.12.2018 JP 2018230396**

(71) Applicant: **Panasonic Intellectual Property Management Co., Ltd.**
**Osaka-shi, Osaka 540-6207 (JP)**

(72) Inventors:
• **SOTOYAMA, Takayuki**
  **Osaka-shi, Osaka 540-6207 (JP)**
• **KU, Richol**
  **Osaka-shi, Osaka 540-6207 (JP)**
• **OUCHI, Mikihiro**
  **Osaka-shi, Osaka 540-6207 (JP)**
• **MUTA, Ryuji**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **COMMUNICATION DEVICE, POSITION ESTIMATING METHOD, POSITION ESTIMATING PROGRAM, AND COMMUNICATION SYSTEM**

(57)    A communication device includes: receiving circuitry that receives a radio signal transmitted by a mobile station; and processing circuitry that estimates a position of the mobile station based on a signal waveform profile including information about at least two of a direction of arrival, an arrival time, and a received power of the radio signal. A position estimating method: receives a radio signal transmitted by a mobile station; and estimates a position of the mobile station based on a signal waveform profile including information about at least two of a direction of arrival, an arrival time, and a received power of the radio signal. A communication system includes: a mobile station; and a communication device according to the present disclosure.

FIG. 3A

**Description**

TECHNICAL FIELD

The present disclosure relates to a communication device, a position estimating method, a position estimating program, and a communication system.

BACKGROUND ART

Electronic toll collection systems have become widespread on toll roads. The electronic toll collection systems can collect tolls without human intervention even if a vehicle traveling does not stop. In Japan, for example, the ETC (Electronic Toll Collection) system (NPL 1) and the DSRC (Dedicated Short Range Communications) system (NPL 2) have been standardized as wireless communication systems that can be used for the electronic toll collection systems.
In a worldwide basis such as Europe and South Korea, a road pricing service using a system using the DSRC standard (NPL 3) is provided. 3GPP (Third Generation Partnership Project), which is a standardization organization of mobile communication systems, is studying application of LTE (Long Term Evolution) system (NPL 4) to road-to-vehicle communication for V2X (Vehicle to Everything). Road-to-vehicle communication is expanding also to applications other than the already commercialized electronic toll collection system.

Citation List

Non-Patent Literature

NPL 1: ARIB Standard STD-T55
NPL 2: ARIB Standard STD-T75
NPL 3: ITU-R Recommendation ITU-R M.1453
NPL 4: 3GPP Technical Specification TS36.211 Ver.14.5.0
NPL 5: 3GPP Technical Specification TTS36.212 Ver. 14.5.1

SUMMARY OF THE INVENTION

One non-limiting and exemplary embodiment facilitates providing an improved communication device, position estimating method, position estimating program, and communication system for estimating the position of a mobile station.
A communication device according to an aspect of the present disclosure includes: receiving circuitry that receives a radio signal transmitted by a mobile station, and processing circuitry that estimates a position of the mobile station based on a signal waveform profile including information about at least two of a direction of arrival, an arrival time, and a received power of the radio signal.
A position estimating method according to an aspect of the present disclosure includes: receiving a radio signal transmitted by a mobile station; and estimating the position of a mobile station based on a signal waveform profile including information about at least two of a direction of arrival, an arrival time, and a received power of the radio signal.
A computer program according to an aspect of the present disclosure comprises instructions which, when the computer program is executed by a computer, causes the computer to carry out the steps of: receiving a radio signal transmitted by a mobile station; and estimating the position of the mobile station based on a signal waveform profile including information about at least two of a direction of arrival, an arrival time, and a received power of the radio signal.
A communication system according to an aspect of the present disclosure includes: a mobile station; and a communication device according to the present disclosure.
It should be noted that general or specific embodiments may be implemented as a system, a method, an integrated circuit, a computer program, a storage medium, or any selective combination thereof.
According to one aspect of the present disclosure, it is possible to provide an improved communication device, a position estimating method, a position estimating program, and a communication system for estimating the position of a mobile station.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF DRAWINGS

FIG. 1 is a diagram showing an example of a configuration of a communication system used in an electronic toll collection system.

FIG. 2 is a diagram showing another example of the configuration of the communication system used in the electronic toll collection system.

FIG. 3A is a diagram for explaining a communication system according to a first exemplary embodiment.

FIG. 3B is a diagram showing an example of a communication sequence between a roadside device and an in-vehicle communication device.

FIG. 3C is a diagram showing another example of the communication sequence between the roadside device and the in-vehicle communication device.

FIG. 3D is a diagram showing another example of the communication sequence between the roadside device and the in-vehicle communication device.

FIG. 4 is a diagram showing an example of a relationship between the communication device according to the first exemplary embodiment and an uplink radio signal received from a vehicle traveling.

FIG. 5 is a diagram showing an example of a configuration of a communication device according to the first exemplary embodiment.

FIG. 6 is a diagram showing an example of baseband data converted into a frequency domain by FFT (Fast Fourier Transform) shown in FIG. 5.

FIG. 7A is a diagram for explaining an operation of a response waveform generator shown in FIG. 5.

FIG. 7B is a diagram for explaining an operation of the response waveform generator shown in FIG. 5.

FIG. 7C is a diagram for explaining an operation of the response waveform generator shown in FIG. 5.

FIG. 8A is a diagram for explaining a relationship between a phase difference in a received signal of an electromagnetic wave from each antenna element and a direction of arrival of the electromagnetic wave.

FIG. 8B is a diagram for explaining an example of a steering vector used for estimating a direction of arrival of an electromagnetic wave.

FIG. 9A is a diagram for explaining a waveform generated by a spatial correlator in FIG. 5.

FIG. 9B is a diagram for explaining a waveform generated by the spatial correlator in FIG. 5.

FIG. 9C is a diagram for explaining a waveform generated by the spatial correlator in FIG. 5.

FIG. 10 is a diagram for explaining an operation of a user terminal area determiner according to a second exemplary embodiment.

FIG. 11 is a diagram for explaining an example of an operation of a learning machine according to a third exemplary embodiment.

FIG. 12A is a diagram showing an example of a roadside device according to a fourth exemplary embodiment.

FIG. 12B is a diagram showing an example of a space-time profile according to the fourth exemplary embodiment.

FIG. 13 is a diagram showing an example of a configuration of a roadside device according to a fifth exemplary embodiment.

FIG. 14 is a diagram for explaining an example of a configuration of a terminal remote radio head according to the fifth exemplary embodiment.

FIG. 15 is a diagram for explaining an example of a configuration of an intermediate remote radio head according to the fifth exemplary embodiment.

FIG. 16 is a diagram for explaining an example of a configuration of a baseband unit according to the fifth exemplary embodiment.

FIG. 17A is a diagram for explaining an example of compression of a space-time profile according to a sixth exemplary embodiment.

FIG. 17B is a diagram for explaining an example of compression of the space-time profile according to the sixth exemplary embodiment.

DESCRIPTION OF EMBODIMENTS

Prior to description of exemplary embodiments of the present disclosure, problems in a conventional technology will be described briefly. When a wireless communication system is used in an electronic toll collection system, it is necessary to determine whether or not to perform charging according to a position of a vehicle traveling. Therefore, it is required to provide a function of estimating the position of the vehicle traveling.

In an example, an electronic toll collection (ETC) system includes a roadside machine on a traffic lane or a lane, and performs communication between the roadside machine and an in-vehicle device mounted on a vehicle passing through directly under the roadside machine or on the lane corresponding to the roadside machine, and requests the passing vehicle for payment.

If the roadside machine installed for each lane communicates with an in-vehicle device mounted on a vehicle passing through the adjacent lane, it may cause a confusion in the system operation such as opening of a gate of a lane next to the lane where the in-vehicle device is running. If communication is established between the roadside machine and the in-vehicle device mounted on a vehicle passing through the adjacent ordinary road that is not the vehicle traveling on the toll road to be charged, the vehicle passing through the ordinary road may be charged by mistake.

As a measure for suppressing occurrence of the above problems, for example, a communication area may be prevented from expanding to a lane other than the lane that the roadside machine should correctly cover as the communication area. For example, an antenna with sharp directivity may be used in a roadside machine. Further, for example, an electromagnetic wave absorber may be attached to an electromagnetic interferer such that electromagnetic waves are not irregularly reflected by a roadside block, a guardrail, a tollgate gate facility, etc., which are electromagnetic interferers in or near the communication area.

However, such measures increase communication errors due to the narrowed communication area. Further, it is required to perform work of identifying all the places where the electromagnetic wave absorber needs to be attached and attaching the electromagnetic wave absorber at the time of installation of the facility. Therefore, cost increase associated with the installation of the facility is expected. Further, it is difficult to take measures to prevent irregular reflection of electromagnetic waves on all interferers such as large buses and trucks that are dynamic interferers.

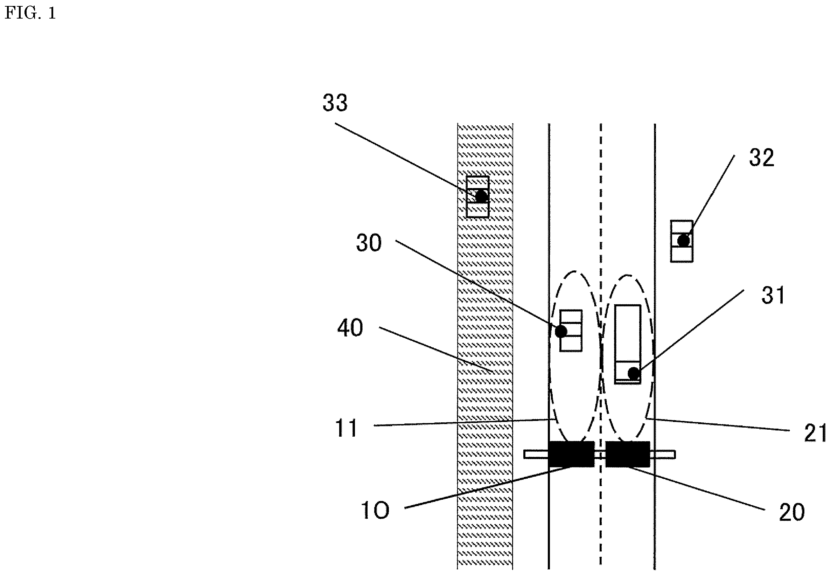

FIG. 1 is a diagram showing an example of a configuration of a communication system used in an electronic toll collection system.

Communication areas 11, 21 of roadside devices 10, 20 are set for each tollgate lane. In-vehicle communication device 30 of a vehicle traveling in communication area 11 of roadside device 10 avoids starting of communication with roadside device 20. In addition, a vehicle traveling in communication area 21 of roadside device 20 and mounting in-vehicle communication device 31 avoids starting of communication with roadside device 10. Further, vehicles 32, 33 traveling outside communication areas 11, 21 are avoided from being charged. In consideration of these, antenna directivities of roadside devices 10 and 20 are formed, and communication areas 11, 21 of roadside devices 10, 20 are set, respectively.

Here, for example, in the case of a communication area having a length of 30 m along a road direction, the time required for a vehicle traveling at 100 km/h to pass through the communication area is about one second. Within this period, the electronic toll collection system performs communication establishment, authentication, and a charging process of the in-vehicle communication device of the vehicle. When five vehicles are traveling in one communication area, the time that can be allocated for the communication establishment, authentication, and charging process for each vehicle is 200 msec.

As described above, when the vehicle is traveling at a high speed, the time available for performing the charging process for each vehicle is relatively short. Also considering the retransmission processing time when reception quality is poor, it is difficult to charge a large number of vehicles traveling at a high speed.

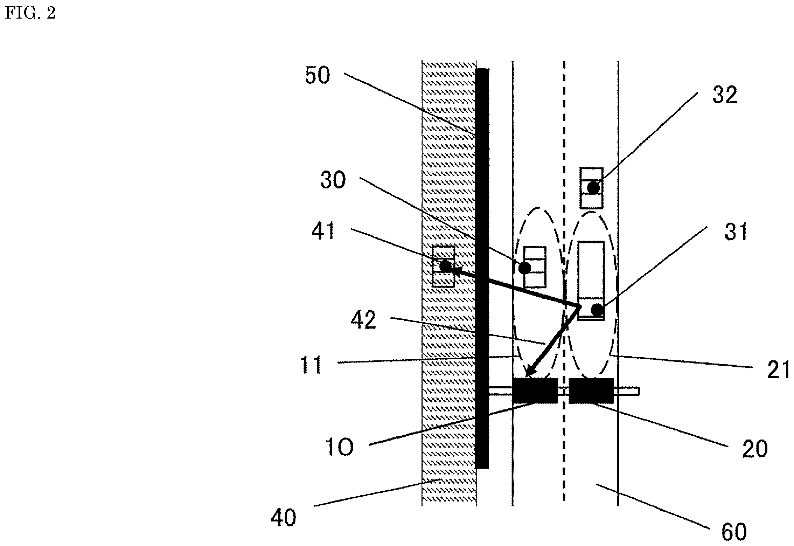

FIG. 2 is a diagram showing another example of configuration of the communication system used in the electronic toll collection system.

The vehicle traveling on side road 40 is excluded from the charging process. However, as shown in FIG. 2, another vehicle traveling (for example, a vehicle mounting in-vehicle communication device 31) may serve as an electromagnetic wave reflector, and there may be a case where communication is established between in-vehicle communication device 41 of the vehicle traveling on side road 40 and roadside device 10 through electromagnetic wave path 42, and charging may be performed.

Therefore, for example, in order to reduce the electric field strength reaching side road 40, electromagnetic wave absorption zone 50 is installed between toll road 60 to be charged and side road 40. By installing electromagnetic wave absorption zone 50, it is possible to reduce a possibility that communication between in-vehicle communication device 41 of the vehicle traveling on side road 40 and roadside device 10 is established, and a possibility that roadside device 10 charges the vehicle mounting in-vehicle communication device 41 by mistake. However, construction costs are required for installing electromagnetic wave absorption zone 50.

The present disclosure provides a communication device, a communication method, a communication program, and a communication system applicable to an electronic toll collection system. However, the electronic toll collection system is an example of a service to which the communication device, the communication method, the communication program, and the communication system of the present disclosure can be applied, and the present disclosure can be applied to various systems that communicate with a moving body or a communication device mounted on the moving body.

Hereinafter, first to sixth exemplary embodiments according to the present disclosure will be described. In the communication system according to the present disclosure, communication with a terminal and signal analysis on a direction from which a radio signal transmitted from the terminal arrives and the like are performed independently. Each of the first to sixth exemplary embodiments may be implemented in combination with at least a part of the other exemplary embodiments. Further, two or more modes of the first to sixth exemplary embodiments may be combined and implemented.

(First exemplary embodiment)

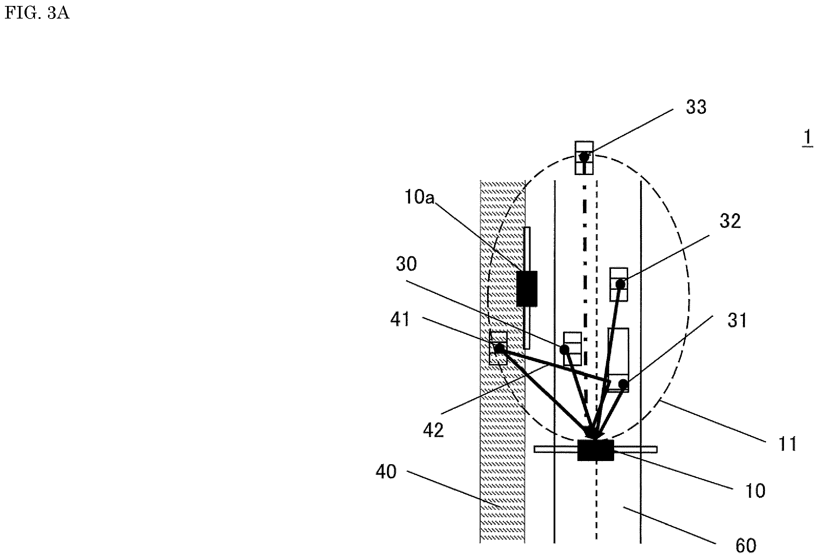

FIG. 3A is a diagram for explaining communication system 1 according to the first exemplary embodiment. Communication system 1 includes roadside devices 10, 10a and in-vehicle communication devices (communication terminals) 30, 31, 32, 33, 41. Although two roadside devices 10, 10a are shown in FIG. 3A, a number of roadside devices may be any number.

Roadside devices 10, 10a communicate with in-vehicle communication devices 30, 31, 32, 33, 41 of a plurality of vehicles traveling in communication area 11 as shown in FIG. 3A, determine that vehicles mounting in-vehicle communication devices 30, 31, 32, 33 are traveling on toll road (for example, a highway) 60, and charge the vehicles. In FIG. 3A, communication area 11 of roadside device 10 is indicated by a broken line, and the communication between roadside device 10 and in-vehicle communication devices 30, 31, 32, 33, 41 is indicated by thick arrows. An alternate long and short dash line arrow indicates communication with in-vehicle communication device 33 at the farthest point from roadside device 10 in communication area 11 of roadside device 10. The vehicles mounting in-vehicle communication device 30, 31, 32, 33, 41 may be described as vehicle 30, 31, 32, 33, 41 with the reference numerals attached to the in-vehicle communication devices for convenience sake.

In-vehicle communication devices 30, 31, 32, 33, 41 communicate with roadside devices 10, 10a. Each of the signals transmitted by in-vehicle communication devices 30, 31, 32, 33, 41 may illustratively include a reference signal and identification information. In-vehicle communication devices 30, 31, 32, 33, 41 may be, for example, terminals compliant with the communication standard of 3GPP (3rd Generation Partnership Project). Non-limiting examples of communication standards include LTE, LTE-A (LTE-Advanced), 4G (4th generation mobile communication system), 5G (5th generation mobile communication system), and the like. 5G is sometimes called NR (new radio). The reference signal may include, for example, a demodulation reference signal (DMRS) and a sounding reference signal (SRS). The identification information is, for example, information for uniquely identifying in-vehicle communication devices 30, 31, 32, 33, 41 in communication area (e.g., cell) 11. In a random access procedure described below, a random access preamble may be used for the identification information. When the identification information is used for charging a vehicle traveling, the identification information uniquely identifies a charging user who uses one of in-vehicle communication devices 30, 31, 32, 33, 41.

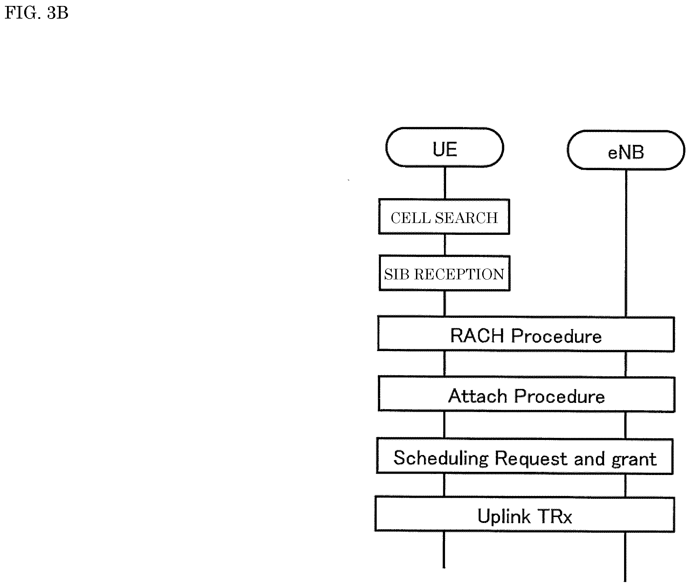

FIG. 3B shows an example of a communication sequence between roadside device 10 and in-vehicle communication devices 30, 31, 32, 33, 40. In FIG. 3B, an eNB (base station device, gNB in 5G) corresponds to roadside device 10, and a UE (terminal) corresponds to one of in-vehicle communication devices 30, 31, 32, 33, 41. Therefore, communication in a direction from the roadside device to the in-vehicle communication device may be referred to as downlink (DL) communication, and vice versa, communication in a direction from the in-vehicle communication device to the roadside device may be referred to as uplink (UL) communication.

First, in FIG. 3B, the UE searches for a cell (cell search) of an eNB to which the UE can connect. The cell is, for example, communication area 11 shown in FIG. 3A. In cell search, the UE discovers a connectable cell (in other words, eNB) by receiving broadcast information (for example, system information block, SIB) transmitted by the eNB.

Next, the UE transmits a connection request (for example, a random access preamble) on the RACH (Random Access Channel) to the connectable eNB discovered in the cell search. Upon receiving a RAR (Random Access Response) as a response to the connection request from the eNB, the UE establishes a connection with the eNB and completes the RACH procedure. The alternate long and short dash line arrow shown in FIG. 3A indicates, for example, a connection request transmitted from in-vehicle communication device 33 to roadside device 10 in the random access procedure.

Next, the UE performs an attach procedure for registering the UE in a core network with respect to the eNB that has established the connection. Next, the UE transmits to the eNB a request (scheduling request) for allocating radio resources (for example, time and frequency) used by the UE for communication with the eNB. The eNB having received the scheduling request, when allocation of the radio resource to the UE that is the connection request source is possible, transmits permission information (grant) indicating the allocation result of the radio resource to the UE. The UE transmits a data signal to the eNB using the radio resource indicated by the received grant. The solid arrows shown in FIG. 3A indicate, for example, data signals transmitted from in-vehicle communication devices 30, 31, 32, 41 to roadside device 10.

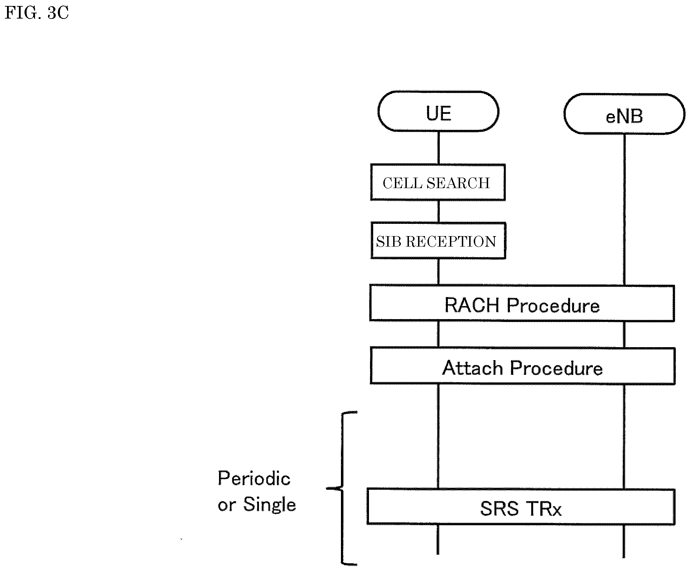

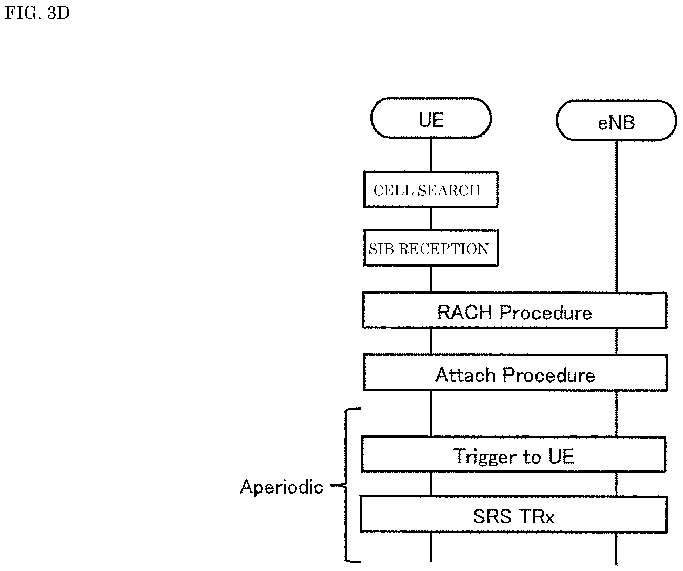

FIGS. 3C and 3D show another example of the communication sequence between roadside device 10 and one of in-vehicle communication devices 30, 31, 32, 33, 41. Also in FIGS. 3C and 3D, the eNB corresponds to roadside device 10, and the UE corresponds to one of in-vehicle communication devices 30, 31, 32, 33, 41.

The sequence up to the attach procedure shown in each of FIGS. 3C and 3D is the same as the sequence up to the attach procedure shown in FIG. 3B, and a description thereof will be omitted. In the sequences shown in FIGS.

3C and 3D, the UE transmits, for example, an SRS (Sounding Reference Signal) after the attach procedure. The SRS is used, for example, in the eNB to measure the quality of UL transmission from the UE. The eNB may preferentially allocate UL radio resources to UEs that have relatively high UL transmission quality.

There are two types of methods for determining an SRS transmission timing, a periodic mode shown in FIG. 3C and an aperiodic mode shown in FIG. 3D. In the periodic mode, the UE transmits the SRS to the eNB at regular intervals. In the aperiodic mode, the UE transmits the SRS to the eNB in response to the transmission request from the eNB.

Referring again to FIG. 3A. By making communication area 11 wider, for example, in a direction along the road, roadside device 10 can establish a communication session with in-vehicle communication devices 30, 31, 32, 33, 41 from an earlier time, and thus can establish communication with in-vehicle communication devices 30, 31, 32, 33 of many vehicles traveling on toll road 60 with more margin. Roadside device 10 extracts, with respect to a vehicle traveling (hereinafter, referred to as a vehicle traveling in communication) in which one of in-vehicle communication devices 30, 31, 32, 33, 41 communicates with roadside device 10, a feature quantity about information on a direction of arrival, a time, and strength of an electromagnetic wave received from one of in-vehicle communication devices 30, 31, 32, 33, 41. Next, roadside device 10 determines whether or not the vehicle traveling in communication is traveling on toll road 60 based on the feature quantity. Next, with respect to in-vehicle communication devices 30, 31, 32 of vehicles determined to be traveling on toll road 60, roadside device 10 performs charging on each of in-vehicle communication devices 30, 31, 32 of the vehicles, for example, by collecting the toll from a bank account registered in advance of the user to be charged uniquely identified by the identification information.

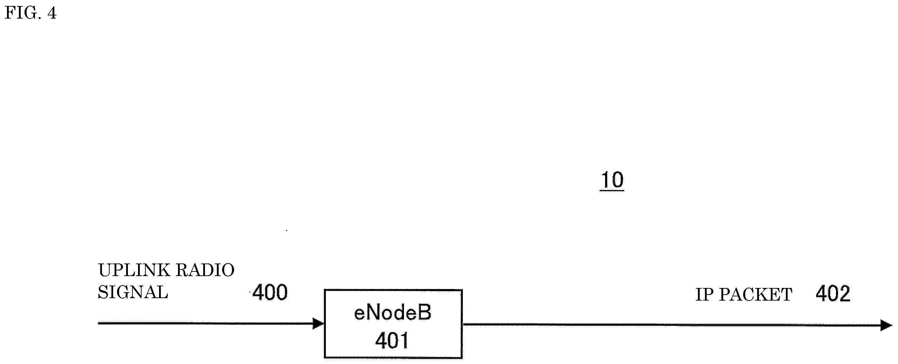

FIG. 4 shows an example of a relationship between communication device 401 according to the first exemplary embodiment and uplink radio signal 400 received from a vehicle traveling. Communication device 401 is, for example, a base station device (eNodeB). Communication device 401 receives uplink radio signal 400 from an in-vehicle communication device (for example, an LTE user terminal) mounted on the vehicle traveling. Next, communication device 401 demodulates and decodes received uplink radio signal 400, and outputs IP (Internet Protocol) packet 402.

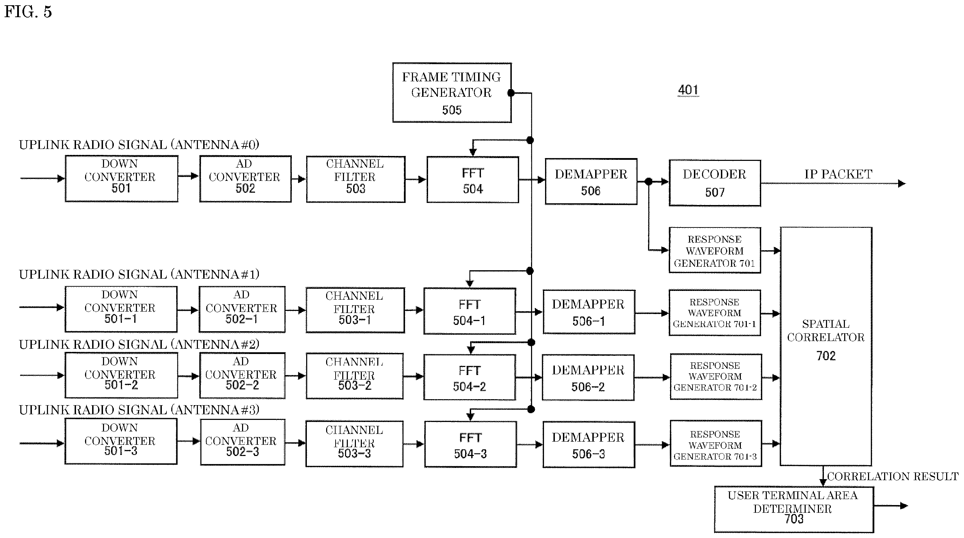

FIG. 5 shows an example of a configuration of communication device 401 according to the first exemplary embodiment.

Communication device 401 is, for example, a base station device (eNodeB) configured as one unit of an LTE system (3GPP TS 36) having high affinity with a multipath environment. Communication device 401 uses the same uplink radio signal input from a plurality of antennas. Here, inputs from four antennas will be described as an example.

Communication device 401 includes down converter 501 (501-1, 501-2, 501-3), AD (analog-to-digital) converter 502 (502-1, 502-2, 502-3), channel filter 503 (503-1, 503-2, 503-3), FFT 504 (504-1, 504-2, 504-3), frame timing generator 505, demapper 506 (506-1, 506-2, 506-3), decoder 507, response waveform generator 701 (701-1, 701-2, 701-3), spatial correlator 702, and user terminal area determiner 703. These constituent elements are implemented with a processing circuit configured, for example, using a semiconductor element. The processing circuit may include, for example, a memory and execute a program stored in the memory. Further, the processing circuit may execute a program read from the connected external storage device.

Down converter 501 (501-1, 501-2, 501-3) frequency-converts a radio signal into a baseband frequency. AD converter 502 (502-1, 502-2, 502-3) converts the frequency-converted signal into a digital signal to generate a discretized data signal.

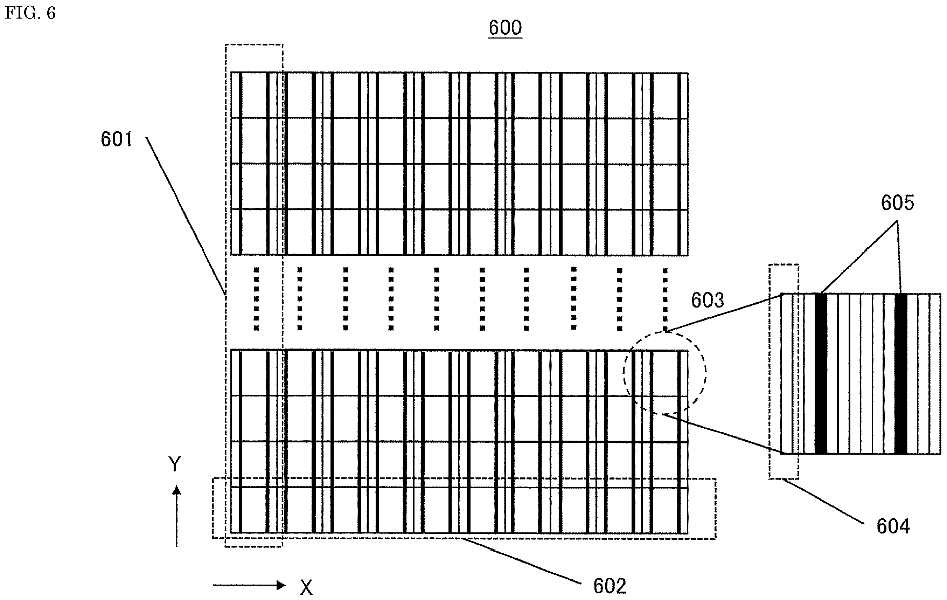

Channel filter 503 (503-1, 503-2, 503-3) band-limits the discretized data signal to a frequency band of a desired signal. FFT 504 (504-1, 504-2, 504-3) transforms the band-limited discretized data signal into a frequency domain signal. Content of processing of FFT 504 (504-1, 504-2, 504-3) will be described later with reference to FIG. 6. Frame timing generator 505 generates a frame timing of the downlink radio signal transmitted by communication device 401, which is a base station device, for example. In one example, the transform timing of FFT 504 follows the frame timing generated by frame timing generator 505.

Demapper 506 (506-1, 506-2, 506-3) extracts the data to be demodulated from the frequency domain signal. Decoder 507 performs a decoding process on the target data to extract an IP packet. The IP packet includes, for example, identification information of the in-vehicle communication device.

The contents of processing described above of down converter 501 (501-1, 501-2, 501-3), AD converter 502 (502-1, 502-2, 502-3), channel filter 503 (503-1, 503-2, 503-3), FFT 504 (504-1, 504-2, 504-3), frame timing generator 505, demapper 506 (506-1, 506-2, 506-3), and decoder 507 are the same as the uplink reception processing of the normal LTE. If necessary, processing specific to SC-FDMA (Single Channel-Frequency-Division Multiple Access) such as 1/2 subcarrier shift processing may be executed.

Demapper 506 (506-1, 506-2, 506-3) extracts reference signal 605 (see FIG. 6) mapped to the resource (block) used for communication by the vehicle traveling in communication. Next, demappers 506 (506-1, 506-2, 506-3) output extracted reference signals 605 to response waveform generators 701 (701-1, 701-2, 701-3), respectively.

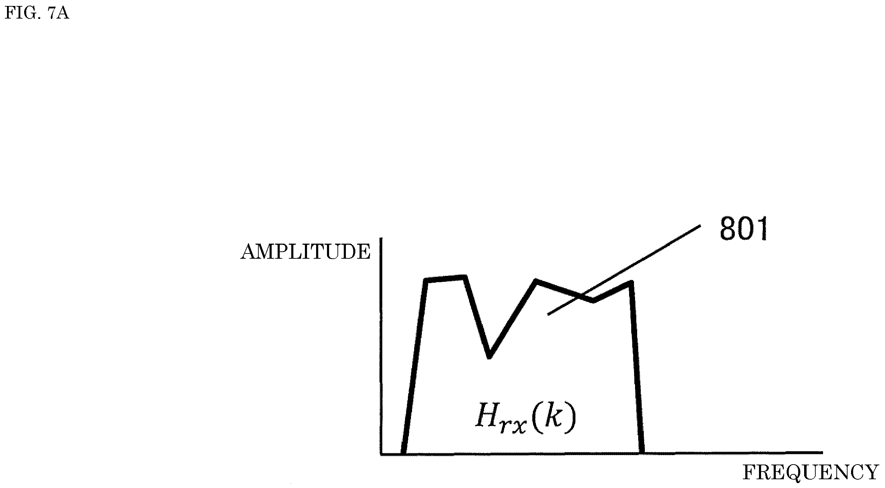

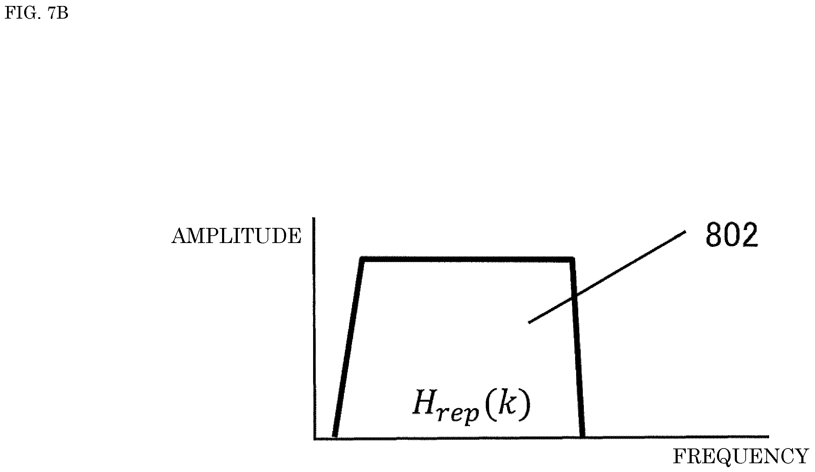

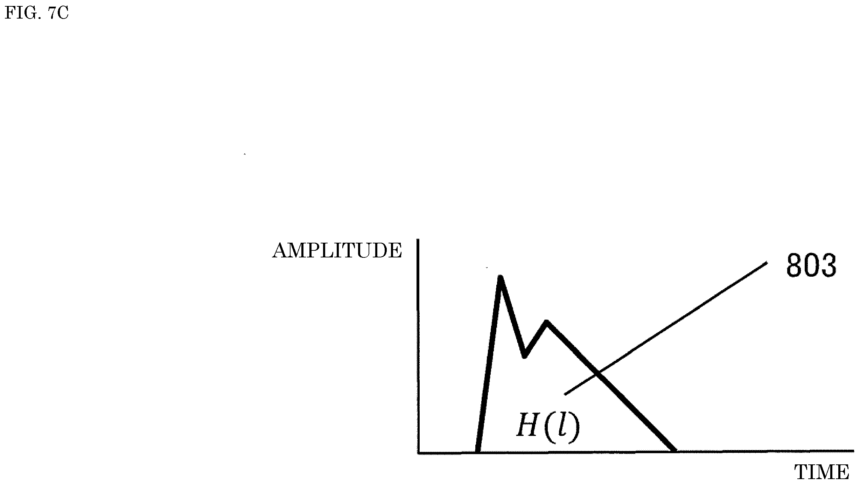

Response waveform generator 701 (701-1, 701-2, 701-3) performs Fourier transform (or performs discrete Fourier transform) on the product of the known reference signal and the reference signal received through each antenna to generate an impulse response waveform. The processing contents of response waveform generator 701 (701-1, 701-2, 701-3) will be described later with reference to FIG. 7.

Spatial correlator 702 correlates the impulse response waveform generated by response waveform generators 701 (701-1, 701-2, 701-3) with the steering vector for each time sample, and generates a space-time profile.

User terminal area determiner 703 estimates the position of the user terminal based on the space-time profile generated by spatial correlator 702. Further, user terminal area determiner 703 determines whether or not the vehicle traveling in communication is traveling on toll road 60 based on the estimated position. Next, user terminal area determiner 703, when having determined that the vehicle traveling in communication is traveling on toll road 60, charges the vehicle traveling, and when not, releases the resources allocated to the in-vehicle communication device of the vehicle traveling.

FIG. 6 is a diagram showing an example of baseband data converted into a frequency domain by FFT 504 (504-1, 504-2, 504-3) shown in FIG. 5. In FIG. 6, the X axis is a time axis and the Y axis is a frequency axis. The time width of one wireless frame 600 is, for example, 10 ms. One wireless frame 600 has 10 subframes 602 for each band.

One wireless frame 600 has a plurality of resource blocks 601 along the frequency axis direction. The plurality of resource blocks 601 have 6, 15, 25, 50, 75 and 100 resource blocks respectively for six bands of 1.4 MHz, 3 MHz, 5 MHz, 10 MHz, 15 MHz and 20 MHz.

One resource block 603 has 14 symbols 604. Symbol 604 has 12 subcarriers. Each subcarrier is modulated by QPSK (Quadrature Phase Shift Keying), 16QAM (Quadrature Amplitude Modulation), 64QAM, or the like.

The user terminal, which is an in-vehicle communication device, transmits data using one resource block 603 assigned by the base station device. Resource block 603 includes reference signal 605 used for demodulating data. The base station device uses reference signal 605 to equalize and demodulate the signal in subcarrier units.

FIGS. 7A to 7C are diagrams for explaining the operation of response waveform generator 701 (701-1, 701-2, 701-3) shown in FIG. 5. Reception waveform 801 of reference signal 605 received from each antenna and taken out by demapper 506 is affected by frequency selective fading other than the direct wave in the electromagnetic wave propagation environment between the in-vehicle communication device mounted on the vehicle traveling in communication and the base station device. The frequency selective fading is due to the reflected wave reflected by the electromagnetic interferer existing in the propagation environment.

On the other hand, as shown in Equation (1), time-correlated waveform 803 (FIG. 7C) can be obtained by performing Fourier transform (or discrete Fourier transform) on the product of reception waveform 801 of reference signal 605 (FIG. 7A) and frequency waveform 802 of reference signal 605 itself (FIG. 7B).

[Math. 1]

$$h(l) = \sum_{k=0}^{N_{SC}} Hrep(k)Hrx(k)exp(2\pi i f_{SC}\frac{Ts}{N_{SC}}kl) \qquad (1)$$

Here, Hrx(k) is a function representing a reception waveform of reference signal 605, and reception waveform 801 represents its power waveform. Hrep(k) is a function representing the reference signal, and frequency waveform 802 represents its power waveform. h(l) is a function representing the impulse response waveform, and time-correlated waveform 803 represents its power waveform. Time-correlated waveform 803 is generally called a delay profile. Nsc is a number of points at which the (discrete) Fourier transform is performed, and is 300 for LTE system bandwidth: 5 MHz, for example. $f_{SC}$ represents a subcarrier interval, and Ts represents a symbol period. For example, in the case of LTE, subcarrier interval fsc is 15 kHz, and symbol period Ts is about 66 microseconds.

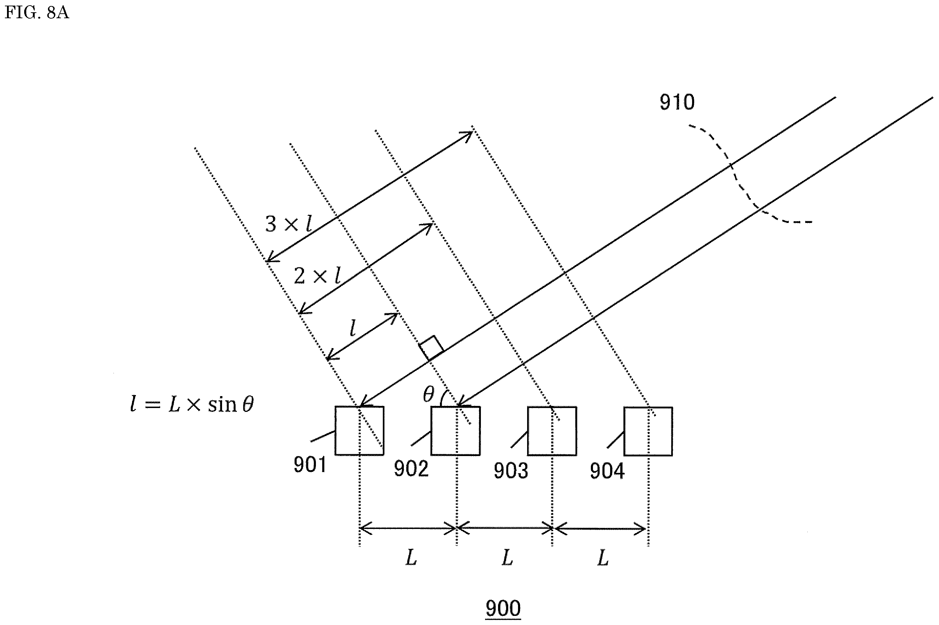

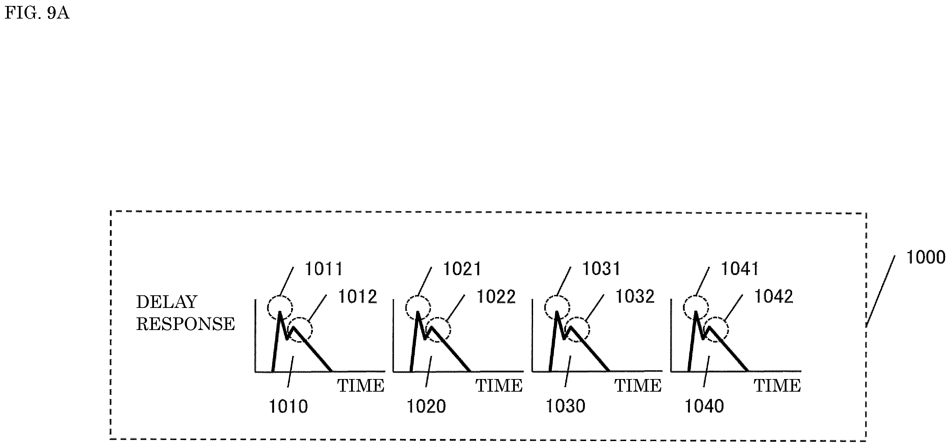

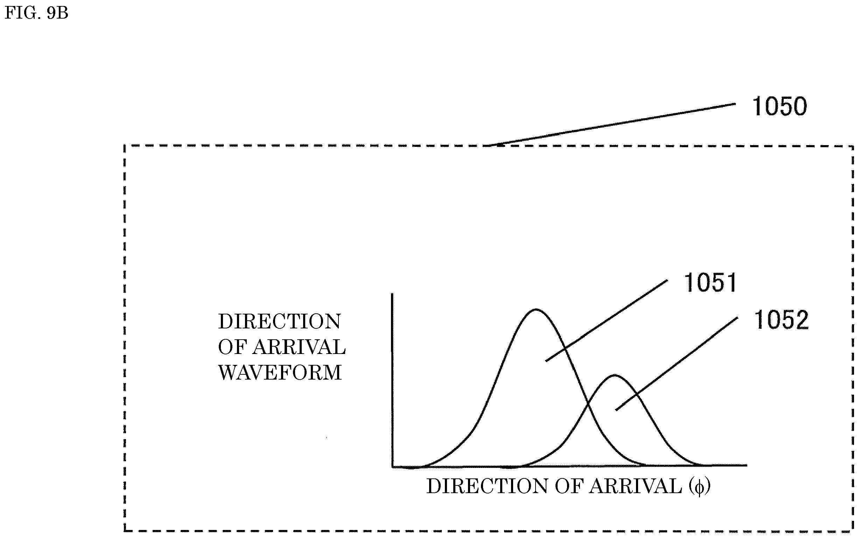

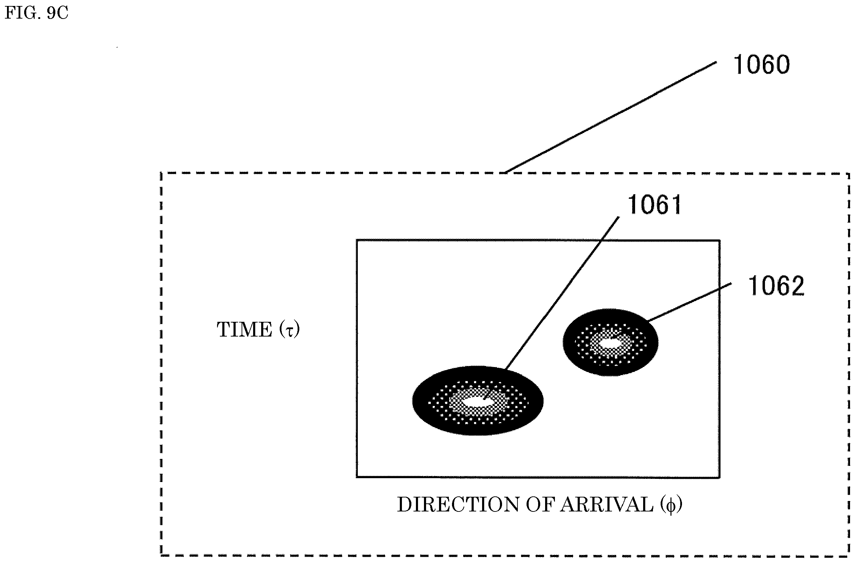

FIG. 8A is a diagram for explaining the relationship between a phase difference in the received signals of electromagnetic wave 910 of antenna elements 901 to 904 and a direction of arrival of electromagnetic wave 910. Array antenna 900 shown in FIG. 9 includes, for example, four antenna elements 901 to 904. Antenna elements 901 to 904 are, for example, evenly arranged on a straight line at an interval of distance L to form array antenna 900.

Electromagnetic wave 910 arriving at array antenna 900 can be regarded as a plane wave when it is sufficiently separated from the transmission source of electromagnetic wave 910. When electromagnetic wave 910 arrives at each of antenna elements 901 to 904, a difference of an integral multiple of distance l = L × sinθ occurs between the arrival distances to the adjacent antenna elements (for example, antenna elements 901, 902).

When distance L is equal to 1/2 of the wavelength of the electromagnetic wave, the phase difference between respective antenna elements 901 to 904 is an integral multiple of π × sinθ radian with respect to leftmost antenna element 901. For example, when electromagnetic wave 910 arrives from the front of array antenna 900, the phase difference between antenna elements 901 to 904 is π × sin(0) radian (= 0 radian = 0 degree). This is because there is no difference in distance between all antenna elements 901 to 904. Further, when electromagnetic wave 910 arrives from the direction completely lateral (+90 degrees = +π/2 radian) to array antenna 900, the phase difference between antenna elements 901 to 904 is an integral multiple of π × sin(π/2) radian (= π radian = 180 degrees).

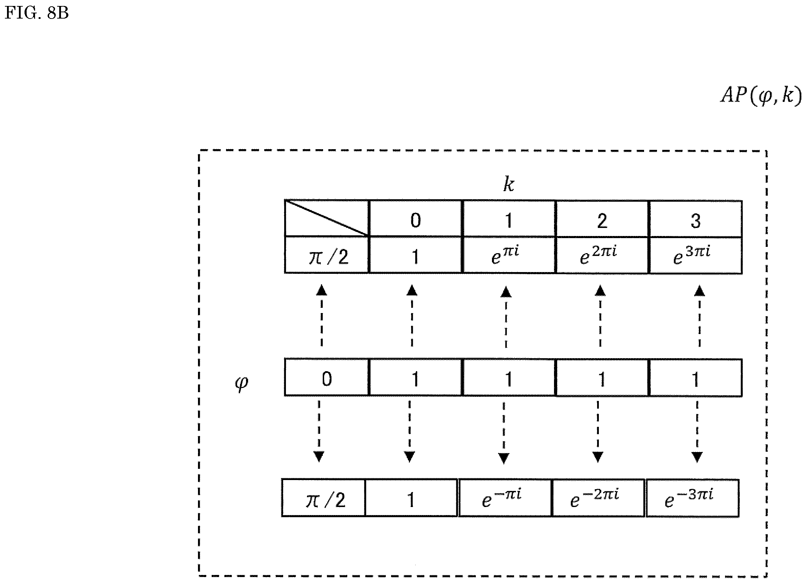

FIG. 8B is a diagram for explaining an example of steering vector AP($\varphi$, k) used for estimating the direction of arrival of electromagnetic wave 910. Steering vector AP($\varphi$, k) represents the phase difference between the received signal at the leftmost antenna element and the received signal at the kth (antenna element number k) antenna element from the leftmost side with the leftmost side as the 0th, of the plane wave arriving from direction $\varphi$.

FIGS. 9A to 9C are diagrams for explaining the waveform generated by spatial correlator 702 in FIG. 5. Graphs 1000 of the delay profile waveform shown in FIG. 9A respectively plot the power (amplitude) waveforms of impulse response (delay response) waveforms 1010, 1020, 1030, 1040 after Fourier transform of the reference signal received by the four receiving antennas of the base station device. Since antenna elements 901 to 904 shown in FIG. 8A receive a substantially plane wave, impulse response waveforms 1010, 1020, 1030, 1040 have substantially the same waveform.

As shown in FIG. 9A, each of impulse response waveforms 1010, 1020, 1030, 1040 has two peaks (peak 1011 and peak 1012, peak 1021 and peak 1022, peak 1031 and peak 1032, peak 1041 and peak 1042). The two peaks indicate that there are two arrival paths for the received signal.

On the other hand, the respective received signals received by antenna elements 901 to 904 have a phase difference corresponding to a distance difference that is an integral multiple of distance I shown in FIG. 8A, depending on the direction of arrival of the received signals. As described above, since graph 1000 of the delay profile waveform is a plot of the power (amplitude) waveform, it is to be noted that the phase difference (phase information) that is actually occurring does not appear in graph 1000 of the delay profile waveform.

Spatial correlator 702 shown in FIG. 5 takes inner product Ang($\varphi$, $\tau$) of waveform h($\tau$, k) of same sample time $\tau$ of the impulse response received by each antenna element, and steering vector AP($\varphi$, k) shown in FIG. 8B according to following Equation (2).
[Math. 2]

$$Ang(\varphi, \tau) = \sum_{k=0}^{K-1} \left( h(\tau, k) \overline{AP(\varphi, k)} \right) \qquad (2)$$

Here, K represents a number of antenna elements of the base station device, k represents the antenna element number, and $\varphi$ represents the direction of arrival.

Then, the horizontal axis (X axis) represents direction of arrival $\varphi$, the depth direction (Y axis) represents time $\tau$, the vertical axis (Z axis) plots the size of Ang($\varphi$, $\tau$), and thus graphs 1050, 1060 of the direction of arrival waveforms shown in FIGS. 9B and 9C are obtained. Graph 1050 is a graph of the direction of arrival waveform viewed from the Y-axis direction, and graph 1060 is a graph of the direction of arrival waveform viewed from the Z-axis direction. Therefore, graph 1050 is plotted on the same plane even if the direction of arrival waveforms of the received signals actually arrived at different times. Also, as shown in graph 1060, the X axis represents the direction of arrival, the Y axis represents the arrival time, and the Z axis represents strength of the received power. Alternatively, a graph representing strength of the received power by contrasting density or color tone on the XY plane, or data expressing these will be referred to as a space-time profile.

In graph 1050 of the direction of arrival waveform, direction of arrival waveform 1051 reflects the correlation calculation result between the delay paths corresponding to peaks 1011, 1021, 1031, 1041 and the steering vector. Further, direction of arrival waveform 1052 reflects the correlation calculation result between the delay paths corresponding to peaks 1012, 1022, 1032, 1042 and the steering vector. The arrival wave represented by space-time profile 1061 corresponds to the arrival wave represented by direction of arrival waveform 1051. The arrival wave represented by space-time profile 1062 corresponds to the arrival wave represented by direction of arrival waveform 1052.

Communication system 1, the method for achieving communication system 1, and the program according to the first exemplary embodiment equalize a plurality of received signals transmitted from a vehicle traveling in communication in a frequency domain independently of a circuit for communication to obtain an impulse response waveform and generate a space-time profile. Next, communication system 1, the method for achieving communication system 1, and the program determine whether or not the vehicle traveling in communication is to be charged based on the space-time profile. According to the first exemplary embodiment, the charging area can be determined for the charging area set independently of the communication area.

In the first exemplary embodiment, the communication device and processing with each of in-vehicle communication devices 30, 31, 32 of the vehicles traveling, and the antenna and processing for analyzing the direction in which the reception received from each of in-vehicle communication devices 30, 31, 32 of the vehicles traveling arrives, etc. are separated. Thereby, according to the first exemplary embodiment, the communication with in-vehicle communication devices 30, 31, 32, 41 of many vehicles traveling at a high speed, and the determination processing of in-vehicle communication devices 30, 31, 32 of the vehicles traveling to be charged among in-vehicle communication devices 30, 31, 32, 41 of those vehicles traveling can be executed in parallel at a higher speed. Therefore, it is possible to charge more vehicles traveling in communication that are traveling on toll road 60. Further, communication system 1, even if there is no special construction (for example, electromagnetic wave absorption zone) for controlling the electric field strength, can determine not to charge in-vehicle communication device 41 of the vehicle traveling outside toll road 60 that should not be charged.

Although the above-described first exemplary embodiment has been described based on the frequency domain, it is also possible to obtain the impulse response waveform by performing a convolution operation of the replica and the received signal in the time domain. For example, response waveform generator 701 (701-1, 701-2, 701-3) performs Fourier transform of the frequency domain signal input from demapper 506 (506-1, 506-2, 506-3) to obtain a received signal in the time domain. Next, response waveform generator 701 (701-1, 701-2, 701-3) may obtain the impulse response waveform by performing a convolution operation with the replica on the received signal in the time domain.

(Second exemplary embodiment)

In the first exemplary embodiment described above, the case of using a single space-time profile has been described. Instead of this, in a second exemplary embodiment, the case of using a plurality of space-time profiles will be described.

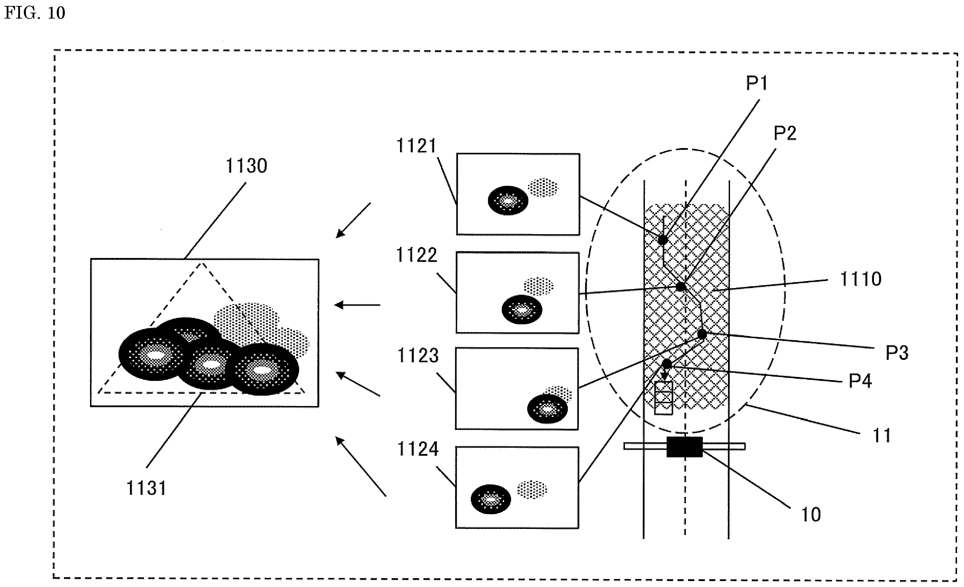

FIG. 10 is a diagram for explaining the operation of user terminal area determiner 703 according to the second exemplary embodiment. Charging area 1110 on the traveling road is included in communication area 11 of roadside device 10. Space-time profile waveforms 1121, 1122, 1123, 1124 are obtained at four points P1, P2, P3, P4 in charging area 1110, respectively.

Space-time profile waveforms 1121, 1122, 1123, 1124 in charging area 1110 can be clearly distinguished by utilizing the fact that they have different characteristics from the space-time profile outside charging area 1110. User terminal area determiner 703 determines whether or not the plurality of space-time profiles have the characteristics of the space-time profile in charging area 1110 to determine whether or not the vehicle traveling in communication is to be charged.

In one example, the criterion for determining whether or not space-time profile waveforms 1121, 1122, 1123, 1124 have the characteristics of the space-time profile in charging area 1110 is whether or not the synthesized waveform of space-time profile waveforms 1121, 1122, 1123, 1124 falls within an area determined by the arrival waveform of the received signal and its delay time. The area determined by the arrival waveform of the received signal and its delay time is, for example, area 1131 in frame 1130.

In another example, the criterion for determining whether or not space-time profile waveforms 1121, 1122, 1123, 1124 have the characteristics of the space-time profile in charging area 1110 is whether or not a number of signals falling within the area determined by the arrival waveform of the received signal and its delay time exceeds a certain threshold. By setting the threshold appropriately, the reliability of the determination can be improved.

According to the second exemplary embodiment, a plurality of space-time profiles are used in area determination such as charging area. By using a plurality of space-time profiles, it is possible to further improve the reliability of the determination result by user terminal area determiner 703, as compared with the case of using a single space-time profile. In the second exemplary embodiment, the area determination may be performed by using the space-time profile created by equalizing the other received signals transmitted from the vehicle traveling in communication in the frequency domain and obtaining the impulse response waveform.

(Third exemplary embodiment)

In charging area 1110 shown in FIG. 10, actually, there are many interferers that shield and/or reflect electromagnetic waves, such as fixed interferers such as guardrails and signs around the area, and moving interferers such as other vehicles traveling around the area. If it becomes difficult to clearly distinguish charging area 1110 from the other areas as indicated by 1131 in FIG. 10 by at least one of shielding and reflection of electromagnetic waves by the interferers, the possibility of erroneous determination by user terminal area determiner 703 shown in FIG. 5 increases. Therefore, in a third exemplary embodiment, more space-time profiles are treated as image data for learning. It is possible to distinguish charging area 1110 from other areas by using the learning result (model) for determination.

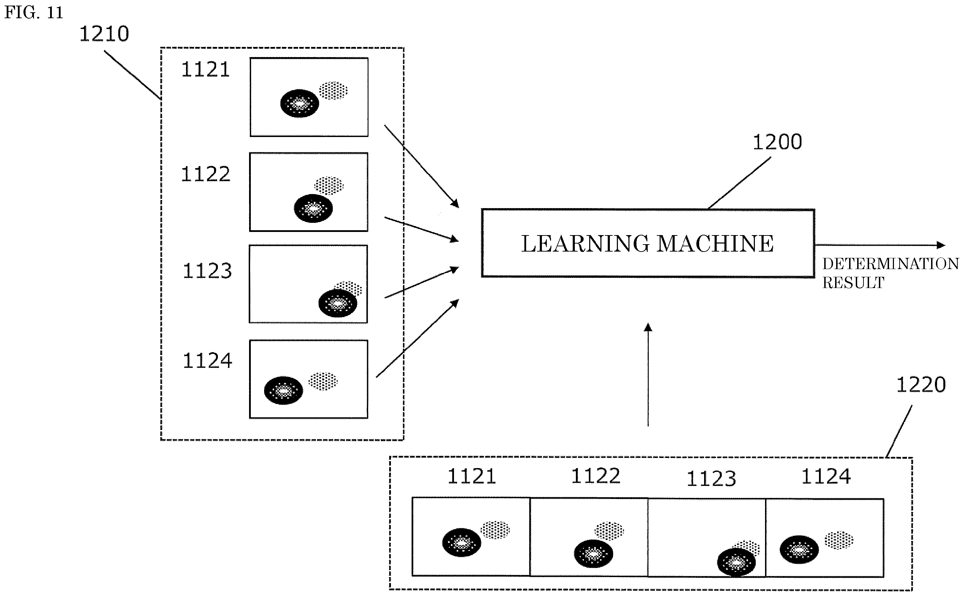

FIG. 11 is a diagram for explaining an example of the operation of learning machine 1200 according to the third exemplary embodiment. User terminal area determiner 703 according to the third exemplary embodiment includes learning machine 1200. Learning machine 1200 learns the space-time profiles of the vehicle traveling in communication and the correct determination results as to whether or not the vehicle is traveling in charging area 1110.

Learning machine 1200 is, for example, a deep learning machine using a neural network or a support vector machine. Learning machine 1200 may learn image data representing a space-time profile. In one example, the image data is data 1210 of a plurality of images individually representing space-time profile waveforms 1121, 1122, 1123, 1124 at predetermined positions in charging area 1110. In another example, the image data is data 1220 of one image in which space-time profile waveforms 1121, 1122, 1123, 1124 at predetermined positions in charging area 1110 are arranged in time series.

According to the third exemplary embodiment, a plurality of space-time profiles in the area are used as image data for learning in the area determination, and the charging determination is performed using the generated model. According to the third exemplary embodiment, the reliability of the determination result by user terminal area determiner 703 can be improved. In the third exemplary embodiment, the area determination may be performed by using the space-time profile created by equalizing other plurality of received signals transmitted from the vehicle traveling in communication in the frequency domain and obtaining the impulse response waveform.

(Fourth exemplary embodiment)

In the second and third exemplary embodiments described above, a plurality of space-time profiles are used in order to reduce the probability of erroneous determination. In a fourth exemplary embodiment, a plurality of space-time profiles generated by using a plurality of devices are used.

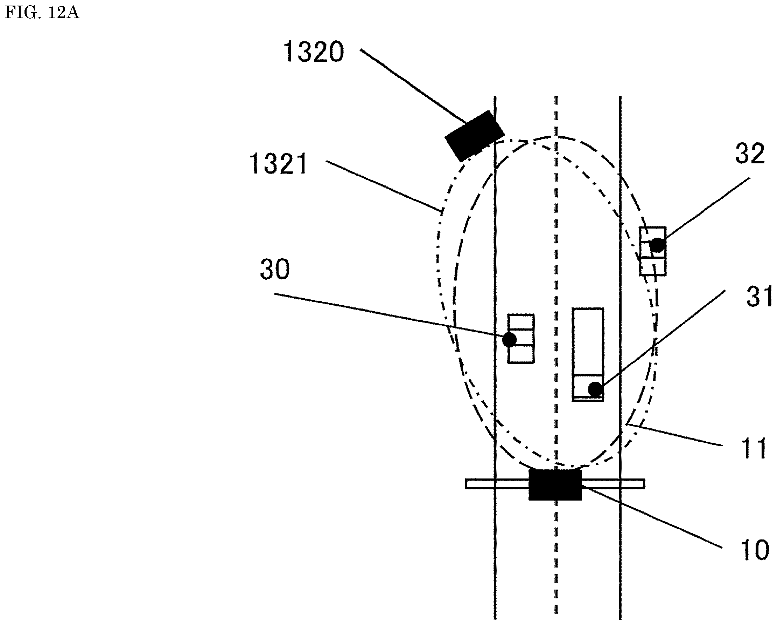

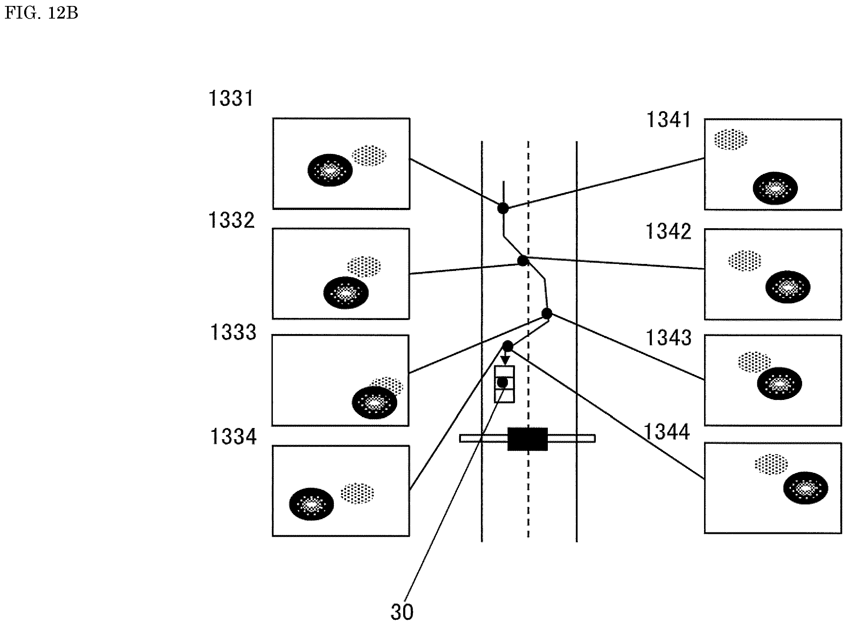

FIG. 12A is a diagram showing an example of roadside device 1320 according to the fourth exemplary embodiment. FIG. 12B is a diagram showing an example of space-time profiles (1331 to 1334 and 1341 to 1344) according to the fourth exemplary embodiment.

As shown in FIG. 12A, roadside device 1320 forms communication area 1321. By using two roadside devices 10 and 1320, as shown in FIG. 12B, space-time profiles (1331 to 1334) of in-vehicle communication devices 30 of the vehicles traveling in communication generated by roadside device 10, and space-time profiles (1341 to 1344) generated by roadside device 1320 are obtained. By increasing a number of determination dimensions using a plurality of determination criteria corresponding to a plurality of space-time profiles, it is possible to increase determination accuracy of the determination result by user terminal area determiner 703. For simplicity, the case where the number of roadside devices is two has been described, but the number of roadside devices may be any number of two or more.

According to the fourth exemplary embodiment, the determination criterion is made multidimensional by using a plurality of communication devices for generating the space-time profile. According to the fourth exemplary embodiment, the reliability of the determination result can be improved.

(Fifth exemplary embodiment)

In the fourth exemplary embodiment, as described above, the space-time profile is acquired using the plurality of roadside devices 10, 1320. On the other hand, it is complicated for a plurality of base station devices to simultaneously communicate with an in-vehicle communication device of a specific vehicle traveling, and neither LTE nor DSRC has such a function. Therefore, in a fifth exemplary embodiment, a plurality of remote radio heads (RRHs) are used to simultaneously acquire space-time profiles from a plurality of positions for a specific vehicle traveling in communication. The RRHs are installed at locations separated from the base station main body by separating some of the functions of the base station device. For the RRH, the base station main body is called, for example, a baseband unit (BBU). An optical interface such as CPRI (common public radio interface) may be used for the connection between the RRH and BBU. The RRH is sometimes called an RRE (remote radio equipment) or a DU (distributed unit). The BBU is sometimes called a CBBU (centralized BBU) or a CU (central unit).

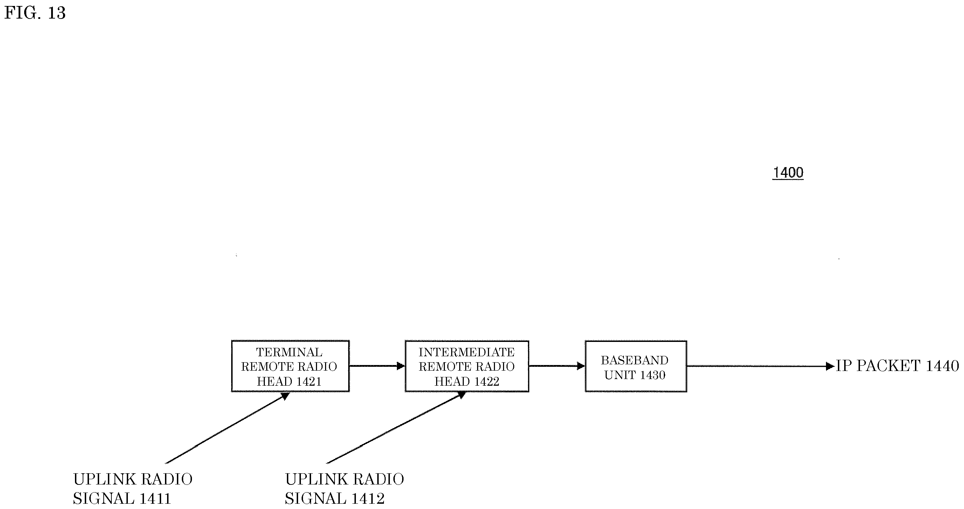

FIG. 13 is a diagram showing an example of the configuration of roadside device 1400 according to the fifth exemplary embodiment. Roadside device 1400 according to the fifth exemplary embodiment includes terminal remote radio head (RRH) 1421, intermediate remote radio head 1422, and baseband unit (communication device) 1430. Here, the terminal remote radio head is a remote head that does not have an upstream remote head among the serially connected remote radio heads. Here, the intermediate remote radio head is a remote head other than the most upstream remote head among the serially connected remote radio heads. Intermediate remote radio head 1422 is provided downstream of terminal remote radio head 1421.

Terminal remote radio head 1421 and intermediate remote radio head 1422 receive the uplink radio signal transmitted from the in-vehicle communication device of the vehicle traveling in communication. Note that, FIG. 13 is a diagram for explaining a case where a number of intermediate remote radio heads 1422 is one, but there may be a plurality of intermediate remote radio heads 1422. Further, without providing intermediate remote radio head 1422, a plurality of terminal remote radio heads 1421 may be provided in parallel upstream of baseband unit 1430.

Baseband unit 1430 decodes uplink radio signal 1411 received by terminal remote radio head 1421 and uplink radio signal 1412 received by intermediate remote radio head 1422, and generates IP packet 1440. Remote radio heads 1421, 1422 generate the space-time profile using reference signal 605 on resource block 603 used for communication by the in-vehicle communication device of the target vehicle traveling.

Next, a method of simultaneously generating a plurality of space-time profiles using a plurality of remote radio heads will be described.

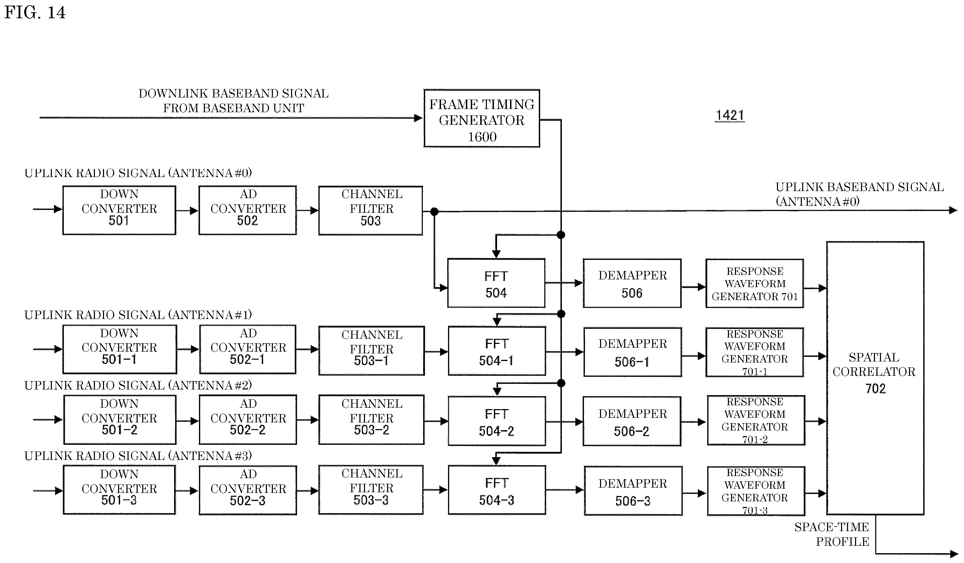

FIG. 14 is a diagram for explaining an example of the configuration of terminal remote radio head 1421 according to the fifth exemplary embodiment. Terminal remote radio head 1421, as compared with communication device 401 shown in FIG. 5, is different from that in a point of including downlink wireless frame timing generator 1600 in place of frame timing generator 505, in a point of outputting the result in spatial correlator 702 to intermediate remote radio head 1422, and in a point of not including user terminal area determiner 703. Description of common points with communication device 401 shown in FIG. 5 will be omitted.

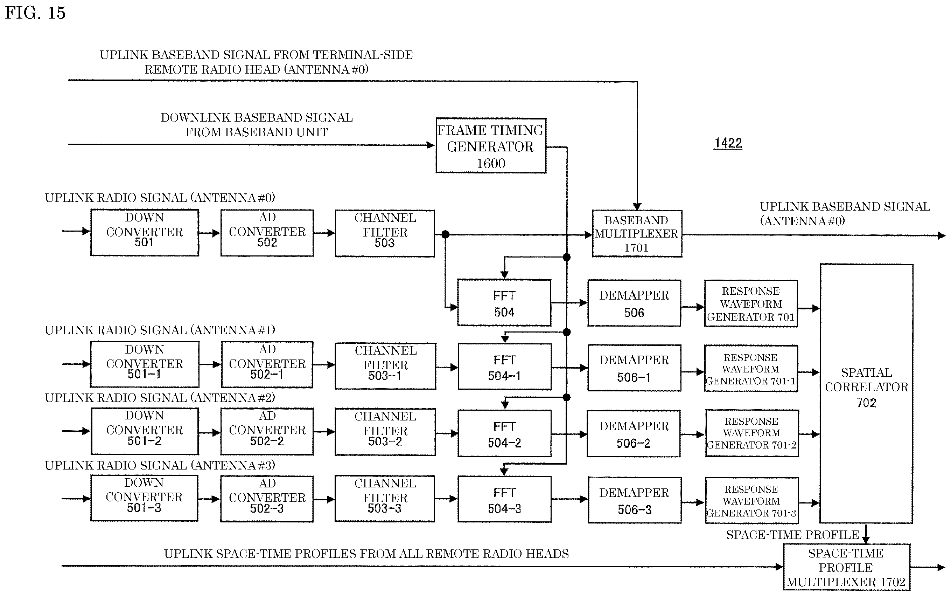

One of channel filters 503 (503-1, 503-2, 503-3) (for example, channel filter 503) passes a baseband (analog or digital) signal from one of the four antennas (for example, antenna #1) to baseband multiplexer 1701 of intermediate remote radio head 1422, which will be described later with reference to FIG. 15. Note that, instead of one of channel filters 503 (503-1, 503-2, 503-3), all channel filters 503, 503-1, 503-2, 503-3 may pass a baseband (analog or digital) signal to intermediate remote radio head 1422.

Downlink wireless frame timing generator 1600 receives the downlink signal transmitted by baseband unit 1430 and performs synchronization processing to regenerate the frame timing synchronized with the wireless frame timing. In one example, the conversion timing of FFT 504 (504-1, 504-2, 504-3) follows the frame timing generated by downlink wireless frame timing generator 1600.

Spatial correlator 702 calculates the correlation between the impulse response waveforms generated by response waveform generators 701 (701-1, 701-2, 701-3) and the steering vector for each time sample, generates a space-time profile, and passes the generated space-time profile to intermediate remote radio head 1422.

According to the fifth exemplary embodiment, it is possible to generate space-time profiles at a plurality of positions from reference signals on the same resource block by using a plurality of remote radio heads 1421, 1422. According to the fifth exemplary embodiment, user terminal area determiner 703 can determine whether or not the vehicle traveling in communication is within charging area 1110 shown in FIG. 10 by using the plurality of space-time profiles. The reliability of the determination result can be improved by using a plurality of space-time profiles and making the determination criteria multidimensional.

According to the fifth exemplary embodiment, even when the remote radio head does not grasp the wireless frame timing, the space-time profile can be generated by detecting the wireless frame timing from the downlink signal and acquiring the timing for generating the space-time profile.

FIG. 15 is a diagram for explaining an example of the configuration of intermediate remote radio head 1422 according to the fifth exemplary embodiment. Intermediate remote radio head 1422 differs from terminal remote radio head 1421 shown in FIG. 14 in that it includes baseband multiplexer 1701 and space-time profile multiplexer 1702. The description of intermediate remote radio head 1422 is omitted for the common points with terminal remote radio head 1421.

Baseband multiplexer 1701 multiplexes the baseband signal received from the remote radio head (for example, terminal remote radio head 1421) provided on the terminal side of intermediate remote radio head 1422 and the baseband signal output by channel filter 503, and passes the multiplexed baseband signal to a remote radio head (not shown) provided on a side of baseband unit 1430 or baseband unit 1430. Space-time profile multiplexer 1702 similarly multiplexes the space-time profile received from the remote radio head (for example, terminal remote radio head 1421) provided on the terminal side of intermediate remote radio head 1422 and the space-time profile generated by spatial correlator 702, and passes the multiplexed space-time profile to a remote radio head provided on the side of baseband unit 1430 or baseband unit 1430. The multiplexing may be, for example, any of time division multiplexing (TDM), frequency division multiplexing (FDM), code division multiplexing (CDM), and space division multiplexing (SDM).

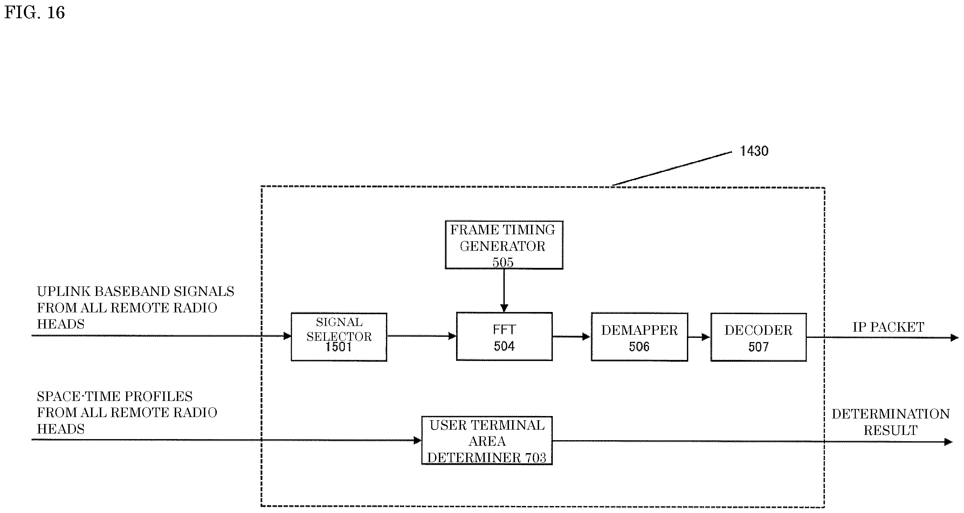

FIG. 16 is a diagram for explaining an example of the configuration of baseband unit 1430 according to the fifth exemplary embodiment. Baseband unit 1430 includes signal selector 1501, FFT 504, frame timing generator 505, demapper 506, decoder 507, and user terminal area determiner 703.

Signal selector 1501 selects an uplink baseband signal to be decoded from the uplink received signals from all remote radio heads 1421, 1422. Frame timing generator 505 generates a frame timing in synchronization with the timing at which baseband unit 1430 transmits a downlink signal. FFT 504 converts an uplink baseband signal to be decoded into a baseband signal in a frequency domain based on the frame timing generated by frame timing generator 505.

Demapper 506 extracts the resource block to be decoded from the baseband signal in the frequency domain. Decoder 507 decodes the resource block and takes out an IP packet. Baseband unit 1430 may further perform SC-FDMA-specific processing such as 1/2 subcarrier shift processing.

All connected remote radio heads 1421, 1422 generate the space-time profile waveform by using the reference signals from the in-vehicle communication devices of all the vehicles traveling in communication, and transmit it to baseband unit 1430. User terminal area determiner 703 of baseband unit 1430 determines whether or not the vehicle traveling in communication is in the charging area, and outputs the determination result.

In the fifth exemplary embodiment, the space-time profile waveform is generated using remote radio heads 1421, 1422. As for the exemplary embodiment using remote radio heads 1421, 1422, an exemplary embodiment using the array antenna and spatial correlator 702 can be considered as in the second exemplary embodiment.

**EP 3 764 122 A1**

(Sixth exemplary embodiment)

In the first to fifth exemplary embodiments, user terminal area determiner 703 determines whether or not the vehicle traveling in communication exists in charging area 1110 using the space-time profile having three-dimensional information. However, the amount of information is large in the space-time profile information having three-dimensional information including the information of the arrival angle resolution, the delay time resolution, and the amplitude resolution. The arrival angle is an angle indicating the direction of arrival. The larger the amount of information, the longer it takes for user terminal area determiner 703 to determine whether or not charging is possible, and the high-speed information transmission means is required, resulting in higher communication cost and calculation cost.

Therefore, in a sixth exemplary embodiment, the delay spread and the angle spread are calculated after the space-time profile is generated. Then, by compressing the three-dimensional information of the arrival angle resolution, the delay time resolution, and the amplitude resolution of the space-time profile into two-dimensional information, and performing the terminal area determination using the compressed two-dimensional information, it is possible to reduce the communication cost and calculation cost.

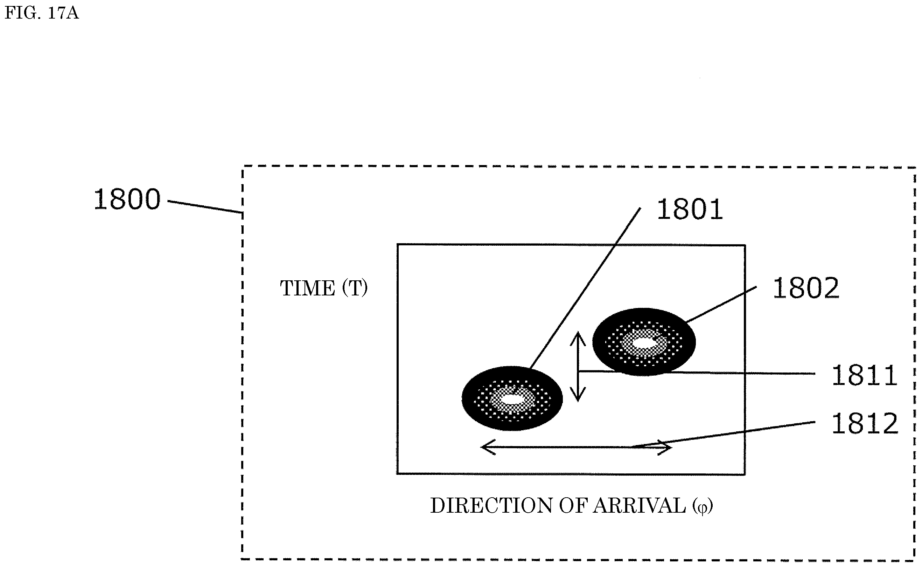

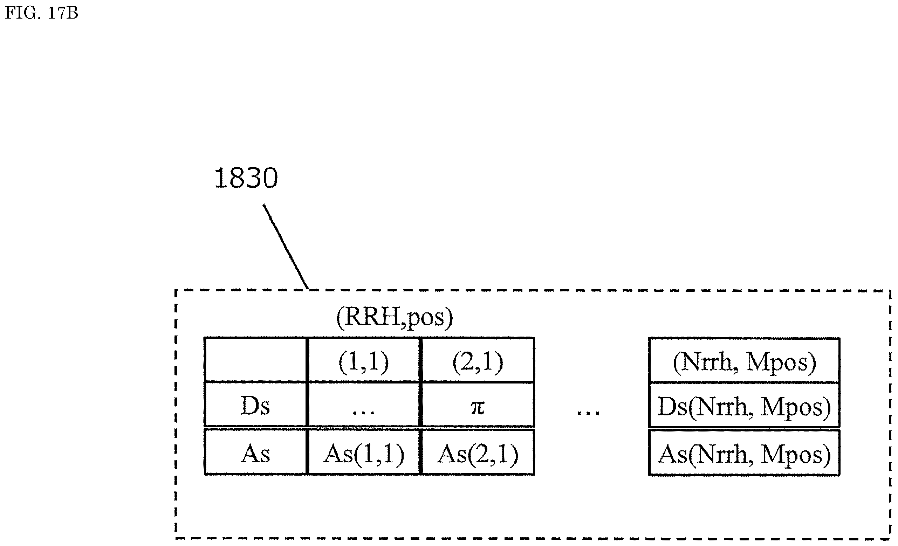

FIGS. 17A and 17B are diagrams for explaining an example of compression of the space-time profile according to the sixth exemplary embodiment. In FIG. 17A, space-time profile 1800 has two delay paths 1801, 1802. In order to compress space-time profile 1800, first, for two delay paths 1801, 1802, dispersion 1811 in the delay direction and dispersion 1812 in the arrival angle (angle indicating the direction of arrival) are obtained.

Dispersion 1811 in the delay direction is called delay spread Ds and can be obtained by following Equations (3) to (5).

[Math. 3]

$$P_{all} = \sum_{t=0}^{T} P(t) \qquad (3)$$

[Math. 4]

$$D = 1/P_{all} \sum_{t=0}^{T} t * P(t) \qquad (4)$$

[Math. 5]

$$D_s = \sqrt{1/P_{all} \sum_{t=0}^{T} (t - D)^2 * P(t)} \qquad (5)$$

Here, P(t) represents the strength of the received power at discrete time t, and T represents the maximum value of the observation time of the received power.

The dispersion in the angular direction is called angular spread As, and can be obtained by following Equations (6) to (8).

[Math. 6]

$$P_{all} = \sum_{\varphi=\varphi_{min}}^{\varphi_{max}} P(\varphi) \qquad (6)$$

[Math. 7]

$$D = 1/P_{all} \sum_{\varphi=\varphi_{min}}^{\varphi_{max}} \varphi * P(\varphi) \qquad (7)$$

[Math. 8]

$$A_s = \sqrt{1/P_{all} \sum_{\varphi=\varphi_{min}}^{\varphi_{max}} (\varphi - D)^2 * P(\varphi)} \qquad (8)$$

Here, $P(\varphi)$ represents the strength of the received power at arrival angle (angle indicating the direction of arrival)$\varphi$, and $\varphi_{min}$, $\varphi_{max}$ represent the minimum value and the maximum value of the observed arrival angle of the received power, respectively.

Let $N_{rrh}$ be a number of remote radio heads and $M_{pos}$ be a number of observed positions of a specific vehicle traveling in communication, and set 1830 (FIG. 17B) of $N_{rrh} \times M_{pos}$ compressed space-time profiles is obtained. User terminal area determiner 703 performs machine learning or multivariate analysis on set 1830 of compressed space-time profiles. Here, the multivariate analysis is, for example, multiple regression analysis, principal component analysis, factor analysis, canonical correlation analysis, or discriminant analysis. As described above, user terminal area determiner 703 according to the sixth exemplary embodiment determines whether or not the vehicle traveling in communication is in the charging area, based on a smaller amount of information as compared with a set of uncompressed space-time profiles.

According to the sixth exemplary embodiment, the delay dispersion value (delay spread) and the arrival angle dispersion value (angle spread) extracted from the space-time profile are subjected to machine learning or multivariate analysis. Then, by using the result of machine learning or multivariate analysis, it is determined whether or not the vehicle traveling in communication is in the charging area. According to the sixth exemplary embodiment, the reliability of the determination result by user terminal area determiner 703 can be improved.

(Other exemplary embodiments)

In the first to sixth exemplary embodiments, user terminal area determiner 703 identifies and charges the vehicle for the vehicle determined to travel on the toll road. Instead of this, an exemplary embodiment in which processing other than charging is performed is also conceivable. For example, an exemplary embodiment is also conceivable in which user terminal area determiner 703 determines and identifies a person passing a specific passage, and records the passing person. In addition, array antenna 900 may be a two-dimensional array antenna. The direction of arrival can be detected in two dimensions by using a two-dimensional array antenna. For example, an exemplary embodiment is also conceivable in which in an indoor event venue where two-dimensional array antenna 900 is installed vertically downward from the ceiling, user terminal area determiner 703 identifies a mobile terminal of a visitor who is determined to be in a specific area, and provides the information related to the specific area to the identified mobile terminal.

In the first to sixth exemplary embodiments, user terminal area determiner 703 identifies and charges the vehicle for the vehicle determined to travel on the toll road. Instead of this, a charging device provided separately from user terminal area determiner 703 may perform the charging process for the vehicle.

Although various exemplary embodiments have been described above with reference to the drawings, it goes without saying that the present disclosure is not limited to such examples. It is obvious to those skilled in the art that various changes or modifications can be conceived within the scope of the claims, and it should be understood that these also belong to the technical scope of the present disclosure. Further, the constituent elements in the above-described exemplary embodiments may be arbitrarily combined without departing from the spirit of the disclosure.

In each of the above-described exemplary embodiments, the present disclosure has been described by taking an example in which the present disclosure is configured using hardware, but the present disclosure can also be implemented by software in cooperation with hardware.

Each functional block used in the description of each of the above exemplary embodiments is typically implemented as an LSI (large-scale integration) that is an integrated circuit. The integrated circuit may control each functional block used in the description of the above exemplary embodiments and may have an input and an output. These may be individually made into one chip, or may be made into one chip so as to include some or all of them. The name used here is LSI, but it may also be called IC (integrated circuit), system LSI, super LSI, or ultra LSI depending on the degree of integration.

Further, the method of circuit integration is not limited to the LSI, and it may be implemented using a dedicated circuit or a general-purpose processor. A field programmable gate array (FPGA) that can be programmed after manufacturing the LSI, or a reconfigurable processor (Reconfigurable Processor) capable of reconfiguring the connection or setting of circuit cells inside the LSI may be used.

Furthermore, if an integrated circuit technology comes out to replace LSI's as a result of the advancement of semiconductor technology or a derivative other technology, it is naturally also possible to carry out function block integration using this technology. The application of biotechnology is possible, for example.

The present disclosure can be realized by any kind of apparatus, device or system having a function of communication, which is referred as a communication apparatus. Some non-limiting examples of such communication apparatus include a phone (e.g., cellular (cell) phone, smart phone), a tablet, a personal computer (PC) (e.g., laptop, desktop, notebook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof. The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

In the above description, the notation "... unit" used for each constituent element may be replaced with another notation such as "... circuitry", "... device", "... unit", or "... module".

(Summary of exemplary embodiments)

A communication device according to the present disclosure includes: a receiving circuitry that receives a radio signal transmitted by a mobile station; and a processing circuitry that estimates a position of the mobile station based on a signal waveform profile including information about at least two of a direction of arrival, an arrival time, and a received power of the radio signal.

In the communication device of the present disclosure, the processing circuitry determines, based on the estimated position, whether or not the mobile station is moving in an area in which the mobile station is to be identified, and when the processing circuitry determines that the mobile station is moving in the area in which the mobile station is to be identified, identifies the mobile station based on the identification information included in the radio signal.

In the communication device of the present disclosure, the area in which the mobile station is to be identified is a charging area in which the mobile station is requested for payment, and the processing circuit requests the identified mobile station for payment.

In the communication device of the present disclosure, the mobile station includes a plurality of antennas, and the processing circuitry generates, as the signal waveform profile, at least one space-time profile that represents the relationship between the direction of arrival, the arrival time, and the received power, based on a reference signal included in the radio signal received by the plurality of antennas.

In the communication device of the present disclosure, the at least one space-time profile includes a plurality of space-time profiles, and the processing circuitry learns the plurality of space-time profiles when the mobile station is moving in the area in which the mobile station is to be identified, and the determination of whether or not the mobile station is moving in the area in which the mobile station is to be identified is based on the plurality of space-time profiles generated based on the radio signal received by the receiving circuitry and a result of the learning.

In the communication device of the present disclosure, the processing circuitry receives, from another communication device, another signal waveform profile generated based on a radio signal received by the other communication device through a plurality of antennas, and the estimation of the position of the mobile station is based on the signal waveform profile generated by the processing circuitry and the received other signal waveform profile.

In the communication device of the present disclosure, the other communication device is a remote radio head.

In the communication device of the present disclosure, the processing circuitry generates the signal waveform profile according to a wireless frame timing of a downlink radio signal transmitted to the mobile station.

In the communication device of the present disclosure, the processing circuitry detects, from the at least one space-time profile, a value indicating the variance of the delay amount and a value indicating the variance of the arrival angle that is the angle indicating the direction of arrival, and the determination of whether or not the mobile station is moving in the area in which the mobile station is to be identified is based on the value indicating the variance of the delay amount and the value indicating the variance of the arrival angle.

A position estimating method of the present disclosure receives a radio signal transmitted by a mobile station, and estimates the position of the mobile station based on a signal waveform profile including information about at least two of the direction of arrival, the arrival time, and the received power of the radio signal.

A position estimating program of the present disclosure comprises instructions which, when the program is executed by a computer, causes the computer to carry out the steps of: receiving a radio signal transmitted by a mobile station; and estimating the position of the mobile station based on a signal waveform profile including information about at least two of the direction of arrival, the arrival time, and the received power of the radio signal.

A communication system according to the present disclosure includes: a mobile station; and a communication device according to the present disclosure.

INDUSTRIAL APPLICABILITY

An aspect of the present disclosure is useful for charging a vehicle traveling on a toll road adjacent to an ordinary road.

REFERENCE MARKS IN THE DRAWINGS

| | |
|---|---|
| 10 | roadside device |
| 11, 21 | communication area |
| 20 | roadside device |
| 30, 31, 32, 33, 41 | in-vehicle communication device (vehicle) |
| 40 | side road |
| 42 | electromagnetic wave path |
| 50 | electromagnetic wave absorption zone |
| 60 | toll road |
| 401 | communication device |
| 402 | IP packet |
| 501, 501-1, 501-2, 501-3 | down converter |
| 502, 502-1, 502-2, 502-3 | AD converter |
| 503, 503-1, 503-2, 503-3 | channel filter |
| 504, 504-1, 504-2, 504-3 | FFT |
| 505 | frame timing generator |
| 506, 506-1, 506-2, 506-3 | demapper |
| 507 | decoder |
| 600 | wireless frame |
| 601 | resource block |
| 602 | sub-frame |
| 603 | resource block |
| 604 | symbol |
| 605 | reference signal |
| 701, 701-1, 701-2, 701-3 | response waveform generator |
| 702 | spatial correlator |
| 703 | user terminal area determiner |
| 801 | reception waveform |
| 802 | frequency waveform |
| 803 | time-correlated waveform |
| 900 | array antenna |
| 901~904 | antenna element |
| 910 | electromagnetic wave |
| 1010 | impulse response waveform |

| 1050, 1060 | direction of arrival waveform graph |
|---|---|
| 1051, 1052 | direction of arrival waveform |
| 1061, 1062 | space-time profile |
| 1110 | charging area |
| 1121, 1122, 1123, 1124 | space-time profile waveform |
| 1200 | learning machine |
| 1320 | roadside device |
| 1321 | communication area |
| 1400 | roadside device |
| 1421 | terminal remote radio head |
| 1422 | intermediate remote radio head |
| 1430 | baseband unit |
| 1440 | IP packet |
| 1501 | signal selector |
| 1600 | wireless frame timing generator |
| 1701 | baseband multiplexer |
| 1702 | space-time profile multiplexer |
| 1800 | space-time profile |
| 1801 | delay path |

**Claims**

1. A communication device comprising:

   receiving circuitry which, in operation, receives a radio signal transmitted by a mobile station; and
   processing circuitry which, in operation, estimates a position of the mobile station, based on a signal waveform profile including information about at least two of a direction of arrival, an arrival time, and a received power of the radio signal.

2. The communication device according to claim 1, wherein the processing circuitry, in operation, determines, based on the estimated position, whether or not the mobile station is moving in an area in which the mobile station is to be identified, and when the processing circuitry determines that the mobile station is moving in the area in which the mobile station is to be identified, identifies the mobile station based on identification information included in the radio signal.

3. The communication device according to claim 2, wherein the area in which the mobile station is to be identified is a charging area in which the mobile station is requested for payment, and the processing circuitry, in operation, requests the identified mobile station for payment.

4. The communication device according to any one of claims 1 to 3, wherein
   the communication device includes a plurality of antennas, and
   the processing circuitry, in operation, generates, as the signal waveform profile, at least one space-time profile that represents a relationship between the direction of arrival, the arrival time, and the received power, based on a reference signal included in the radio signal received by the plurality of antennas.

5. The communication device according to claim 4, wherein the at least one space-time profile includes a plurality of space-time profiles, and the processing circuitry, in operation, learns the plurality of space-time profiles when the mobile station is moving in the area in which the mobile station is to be identified, wherein the determination of whether or not the mobile station is moving in the area in which the mobile station is to be identified is based on the plurality of space-time profiles generated based on the radio signal received by the receiving circuitry and a result of the learning.

6. The communication device according to claim 4 or 5, wherein the processing circuitry, in operation, receives, from another communication device, another signal waveform profile generated based on a radio signal received by the other communication device through a plurality of antennas, wherein the estimation of the position of the mobile station is based on the signal waveform profile generated by the processing circuitry and the received other signal waveform profile.

7. The communication device according to claim 6, wherein the other communication device is a remote radio head.

8. The communication device according to claim 1, wherein the processing circuitry, in operation, generates the signal waveform profile according to a wireless frame timing of a downlink radio signal transmitted to the mobile station.

9. The communication device according to claim 4, wherein the processing circuitry, in operation, detects, from the at least one space-time profile, a value indicating a variance of a delay amount and a value indicating a variance of an arrival angle that is an angle indicating the direction of arrival, wherein the determination of whether or not the mobile station is moving in the area in which the mobile station is to be identified is based on the value indicating the variance of the delay amount and the value indicating the variance of the arrival angle.

10. A position estimating method comprising:

    receiving a radio signal transmitted by a mobile station; and
    estimating a position of the mobile station based on a signal waveform profile including information about at least two of a direction of arrival, an arrival time, and a received power of the radio signal.

11. A position estimating program comprising instructions which, when the program is executed by a computer, causes the computer to carry out the steps of:

    receiving a radio signal transmitted by a mobile station; and
    estimating a position of the mobile station based on a signal waveform profile including information about at least two of a direction of arrival, an arrival time, and a received power of the radio signal.

12. A communication system comprising:

    the mobile station; and
    the communication device according to any one of claims 1 to 9.

FIG. 1

FIG. 2

EP 3 764 122 A1

FIG. 3B

EP 3 764 122 A1

FIG. 3C

```
        ┌─────────┐          ┌─────────┐
        │   UE    │          │   eNB   │
        └─────────┘          └─────────┘
             │                    │
      ┌──────────────┐            │
      │ CELL SEARCH  │            │
      └──────────────┘            │
             │                    │
      ┌──────────────┐            │
      │SIB RECEPTION │            │
      └──────────────┘            │
             │                    │
      ┌─────────────────────────────────┐
      │        RACH Procedure           │
      └─────────────────────────────────┘
             │                    │
      ┌─────────────────────────────────┐
      │        Attach Procedure         │
      └─────────────────────────────────┘
             │                    │

Periodic   ┌─────────────────────────────────┐
or Single  │           SRS TRx               │
           └─────────────────────────────────┘
             │                    │
```

EP 3 764 122 A1

FIG. 3D

FIG. 4

10

UPLINK RADIO
SIGNAL          400

IP PACKET    402

┌─────────────┐
│   eNodeB    │
│    401      │
└─────────────┘

FIG. 5

401

UPLINK RADIO SIGNAL (ANTENNA #0)

DOWN CONVERTER 501 → AD CONVERTER 502 → CHANNEL FILTER 503 → FFT 504 → DEMAPPER 506 → DECODER 507 → IP PACKET

FRAME TIMING GENERATOR 505

DEMAPPER 506 → RESPONSE WAVEFORM GENERATOR 701 → SPATIAL CORRELATOR 702

UPLINK RADIO SIGNAL (ANTENNA #1)

DOWN CONVERTER 501-1 → AD CONVERTER 502-1 → CHANNEL FILTER 503-1 → FFT 504-1 → DEMAPPER 506-1 → RESPONSE WAVEFORM GENERATOR 701-1 → SPATIAL CORRELATOR 702

UPLINK RADIO SIGNAL (ANTENNA #2)

DOWN CONVERTER 501-2 → AD CONVERTER 502-2 → CHANNEL FILTER 503-2 → FFT 504-2 → DEMAPPER 506-2 → RESPONSE WAVEFORM GENERATOR 701-2 → SPATIAL CORRELATOR 702

UPLINK RADIO SIGNAL (ANTENNA #3)

DOWN CONVERTER 501-3 → AD CONVERTER 502-3 → CHANNEL FILTER 503-3 → FFT 504-3 → DEMAPPER 506-3 → RESPONSE WAVEFORM GENERATOR 701-3 → SPATIAL CORRELATOR 702

SPATIAL CORRELATOR 702 → CORRELATION RESULT → USER TERMINAL AREA DETERMINER 703

FIG. 6

EP 3 764 122 A1

FIG. 7A

AMPLITUDE

801

$H_{rx}(k)$

FREQUENCY

FIG. 7B

AMPLITUDE

802

$H_{rep}(k)$

FREQUENCY

EP 3 764 122 A1

FIG. 7C

AMPLITUDE

803

$H(l)$

TIME

EP 3 764 122 A1

FIG. 8A

$$l = L \times \sin \theta$$

FIG. 8B

$AP(\varphi, k)$

| | $k$ | | | |
|---|---|---|---|---|
| | 0 | 1 | 2 | 3 |
| $\pi/2$ | 1 | $e^{\pi i}$ | $e^{2\pi i}$ | $e^{3\pi i}$ |

$\varphi$

| 0 | 1 | 1 | 1 | 1 |
|---|---|---|---|---|

| $\pi/2$ | 1 | $e^{-\pi i}$ | $e^{-2\pi i}$ | $e^{-3\pi i}$ |
|---|---|---|---|---|

FIG. 9A

FIG. 9B

DIRECTION
OF ARRIVAL
WAVEFORM

DIRECTION OF ARRIVAL ($\phi$)

1050
1051
1052

FIG. 9C

1060

1061

1062

TIME ($\tau$)

DIRECTION OF ARRIVAL ($\phi$)

FIG. 10

FIG. 11

1210

1200

LEARNING MACHINE

DETERMINATION RESULT

1121

1122

1123

1124

1220

1121

1122

1123

1124

FIG. 12A

EP 3 764 122 A1

FIG. 12B

EP 3 764 122 A1

FIG. 13

1400

EP 3 764 122 A1

| TERMINAL REMOTE RADIO HEAD 1421 | → | INTERMEDIATE REMOTE RADIO HEAD 1422 | → | BASEBAND UNIT 1430 | → IP PACKET 1440 |

UPLINK RADIO SIGNAL 1411

UPLINK RADIO SIGNAL 1412

FIG. 14

1421

DOWNLINK BASEBAND SIGNAL FROM BASEBAND UNIT

UPLINK BASEBAND SIGNAL (ANTENNA #0)

FRAME TIMING GENERATOR 1600

UPLINK RADIO SIGNAL (ANTENNA #0)
DOWN CONVERTER 501 → AD CONVERTER 502 → CHANNEL FILTER 503 → FFT 504 → DEMAPPER 506 → RESPONSE WAVEFORM GENERATOR 701

UPLINK RADIO SIGNAL (ANTENNA #1)
DOWN CONVERTER 501-1 → AD CONVERTER 502-1 → CHANNEL FILTER 503-1 → FFT 504-1 → DEMAPPER 506-1 → RESPONSE WAVEFORM GENERATOR 701-1

UPLINK RADIO SIGNAL (ANTENNA #2)
DOWN CONVERTER 501-2 → AD CONVERTER 502-2 → CHANNEL FILTER 503-2 → FFT 504-2 → DEMAPPER 506-2 → RESPONSE WAVEFORM GENERATOR 701-2

UPLINK RADIO SIGNAL (ANTENNA #3)
DOWN CONVERTER 501-3 → AD CONVERTER 502-3 → CHANNEL FILTER 503-3 → FFT 504-3 → DEMAPPER 506-3 → RESPONSE WAVEFORM GENERATOR 701-3

SPATIAL CORRELATOR 702

SPACE-TIME PROFILE

FIG. 15

UPLINK BASEBAND SIGNAL FROM TERMINAL-SIDE
REMOTE RADIO HEAD (ANTENNA #0)

DOWNLINK BASEBAND SIGNAL
FROM BASEBAND UNIT

FRAME TIMING
GENERATOR
1600

1422

UPLINK RADIO SIGNAL (ANTENNA #0)

| DOWN CONVERTER 501 | AD CONVERTER 502 | CHANNEL FILTER 503 |

BASEBAND MULTIPLEXER 1701

UPLINK BASEBAND SIGNAL (ANTENNA #0)

FFT 504 — DEMAPPER 506 — RESPONSE WAVEFORM GENERATOR 701

UPLINK RADIO SIGNAL (ANTENNA #1)

| DOWN CONVERTER 501-1 | AD CONVERTER 502-1 | CHANNEL FILTER 503-1 | FFT 504-1 | DEMAPPER 506-1 | RESPONSE WAVEFORM GENERATOR 701-1 |

UPLINK RADIO SIGNAL (ANTENNA #2)

| DOWN CONVERTER 501-2 | AD CONVERTER 502-2 | CHANNEL FILTER 503-2 | FFT 504-2 | DEMAPPER 506-2 | RESPONSE WAVEFORM GENERATOR 701-2 |

SPATIAL CORRELATOR 702

UPLINK RADIO SIGNAL (ANTENNA #3)

| DOWN CONVERTER 501-3 | AD CONVERTER 502-3 | CHANNEL FILTER 503-3 | FFT 504-3 | DEMAPPER 506-3 | RESPONSE WAVEFORM GENERATOR 701-3 |

SPACE-TIME PROFILE

UPLINK SPACE-TIME PROFILES FROM ALL REMOTE RADIO HEADS

SPACE-TIME PROFILE MULTIPLEXER 1702

EP 3 764 122 A1

FIG. 16

FIG. 17A

EP 3 764 122 A1

FIG. 17B

1830

EP 3 764 122 A1

| (RRH,pos) | | | | | |
|---|---|---|---|---|---|
| | (1,1) | (2,1) | | (Nrrh, Mpos) | |
| Ds | ... | $\pi$ | ... | Ds(Nrrh, Mpos) | |
| As | As(1,1) | As(2,1) | | As(Nrrh, Mpos) | |

## INTERNATIONAL SEARCH REPORT

| International application No. |
| --- |
| PCT/JP2019/007176 |

A. CLASSIFICATION OF SUBJECT MATTER
Int.Cl. G01S5/12(2006.01)i, G07B15/06(2011.01)i
According to International Patent Classification (IPC) or to both national classification and IPC

B. FIELDS SEARCHED

Minimum documentation searched (classification system followed by classification symbols)
Int.Cl.    G01S3/00-G01S3/74,    G01S5/00-G01S5/14,    H04W4/00-H04W99/00,
           G07B15/06

Documentation searched other than minimum documentation to the extent that such documents are included in the fields searched
Published examined utility model applications of Japan          1922-1996
Published unexamined utility model applications of Japan        1971-2019
Registered utility model specifications of Japan                1996-2019
Published registered utility model applications of Japan        1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-244748 A (HITACHI, LTD.) 29 August 2003, paragraphs [0015]-[0017], [0022]-[0026], [0033]-[0050], [0098]-[0102], [0105], fig. 1 | 1, 4, 8, 10-12<br>2-3, 5-7, 9 |
| Y | JP 2016-194454 A (MITSUBISHI HEAVY INDUSTRIES MECHATRONICS SYSTEMS LTD.) 17 November 2016, paragraphs [0024]-[0026], [0038]-[0039], [0060]-[0062], fig. 1, 5, 12 | 2-3, 5, 9 |
| Y | JP 2016-134885 A (THE CHUGOKU ELECTRIC POWER CO., INC.) 25 July 2016, paragraphs [0030], [0050]-[0051], fig. 1(b) | 6-7 |
| Y | JP 2016-500212 A (TELEFONAKTIEBOLAGET L M ERICSSON (PUBL)) 07 January 2016, paragraphs [0140]-[0141] | 7 |
| Y | JP 7-218611 A (HITACHI, LTD.) 16 August 1995, paragraphs [0023], [0028]-[0036] | 9 |

☒    Further documents are listed in the continuation of Box C.          ☒    See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 April 2019 (12.04.2019) | 23 April 2019 (23.04.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
|---|
| PCT/JP2019/007176 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2016/159874 A1 (AGENCY FOR SCIENCE, TECHNOLOGY AND RESEARCH) 06 October 2016, fig. 1-28 | 1-12 |
| A | US 5592181 A (CAI. K.V.) 07 January 1997, fig. 1-2 | 1-12 |
| A | US 2008/0278347 A1 (HO, T. V.) 13 November 2008, fig. 1-4, paragraphs [0019]-[0047] | 1-12 |

Form PCT/ISA/210 (continuation of second sheet) (January 2015)

**INTERNATIONAL SEARCH REPORT**
Information on patent family members

| International application No. |
| --- |
| PCT/JP2019/007176 |

| | | | |
| --- | --- | --- | --- |
| JP 2003-244748 A | 29 August 2003 | US 2003/0114169 A1, paragraphs [0033]-[0035], [0040]-[0045], [0053]-[0061], [0106]-[0110], [0113], fig. 1 | 19 June 2003 |
| JP 2016-194454 A | 17 November 2016 | JP 6381134 B2 | 29 August 2018 |
| | | US 2018/0038935 A1, paragraphs [0046]-[0049], [0072]-[0075], [0116]-[0122], fig. 1A-1B, 5, 12 | 08 February 2018 |
| | | GB 2558030 A | 04 July 2018 |
| | | WO 2016-157613 A1 | 06 October 2016 |
| | | KR 10-2017-0117585 A | 23 October 2017 |
| JP 2016-134885 A | 25 July 2016 | (Family: none) | |
| JP 2016-500212 A | 07 January 2016 | JP 6063050 B2 | 18 January 2017 |
| | | US 2014/0092771 A1, paragraphs [0284]-[0285] | 03 April 2014 |
| | | WO 2014/053487 A1 | 10 April 2014 |
| | | CN 104904145 A | 09 September 2015 |
| JP 7-218611 A | 19 August 1995 | JP 3246822 B2 | 15 January 2002 |
| WO 2016/159874 A1 | 06 October 2016 | (Family: none) | |
| US 5592181 A | 07 January 1997 | TW 344800 B | 11 November 1998 |
| | | CA 2186674 A1 | 19 November 1996 |
| US 2008/0278347 A1 | 13 November 2008 | (Family: none) | |

Form PCT/ISA/210 (patent family annex) (January 2015)